# EUROPEAN PATENT SPECIFICATION

(11) **EP 3 225 555 B1**
(45) Date of publication and mention of the grant of the patent: **23.09.2020**
(21) Application number: 17160039.8
(22) Date of filing: 09.03.2017
(51) Int. Cl.: B64D 45/02, F16B 5/02, F16B 33/06, F16B 35/04, F16B 39/02, F16B 3/00, F16B 11/00, F16B 19/00, F16B 25/00, F16B 25/10, F16B 33/00, B64C 1/12, F16B 1/00

(54) **CONFORMAL CLEARANCE FIT FASTENER, FASTENER SYSTEM, AND METHOD FOR COMPOSITE STRUCTURES**
KONFORMES SPIELPASSUNGS-BEFESTIGUNGSELEMENT, BEFESTIGUNGSSYSTEM UND VERFAHREN FÜR VERBUNDSTRUKTUREN
DISPOSITIF DE FIXATION AVEC JEU CONFORME, SYSTÈME DE FIXATION ET PROCÉDÉ POUR STRUCTURES COMPOSITES

(30) Priority: 31.03.2016 US 201615087841
(43) Date of publication of application: 04.10.2017
(73) Proprietor: The Boeing Company, Chicago, IL 60606-2016 (US)
(72) Inventor: GREEGOR, Robert B., Chicago, IL 60606-2016 (US); LE, Quynhgiao N., Chicago, IL 60606-2016 (US); WHITING, Brent A., Chicago, IL 60606-2016 (US); MITTLEIDER, John A., Chicago, IL 60606-2016 (US)
(74) Representative: Boult Wade Tennant LLP

(56) References cited:
- DE-A1- 3 545 849
- GB-A- 1 273 604
- GB-A- 2 226 801
- US-A1- 2013 330 145

## Description

### BACKGROUND

### 1) Field of the Disclosure

The disclosure relates generally to fasteners and fastener systems and methods for composite structures, and more particularly, to conformal clearance fit fasteners and fastener systems and methods that provide electrical contact and conductivity with composite structures, such as carbon fiber reinforced plastic (CFRP) structures, such as for use in aircraft.

### 2) Description of Related Art

Composite structures, such as carbon fiber reinforced plastic (CFRP) structures, may be used in a wide variety of applications, including in the manufacture of aircraft, spacecraft, rotorcraft, watercraft, automobiles, trucks, and other vehicles and structures, due to their high strength-to-weight ratios, corrosion resistance, and other favorable properties. The composite structures, such as CFRP structures, are typically made of a composite material comprising a matrix material, such as a resin, reinforced with fiber material, such as carbon fiber. The resin is not generally electrically conductive, in contrast to the fiber material.

Good electrical contact between composite aircraft wings, fuselage, or other aircraft structures, and metal fasteners, i.e., metal bolts, used to secure parts of such structures together, is important to provide electrical conductivity and static dissipation, such as in the event of a lightning strike or other electromagnetic effects and electrical event, in order for the current energy from the lightning strike to be dissipated and conducted to ground through the surface of the composite structure. If electrical contact between the metal fasteners and such composite aircraft structures, for example, composite wing skins, is inadequate, the current energy from the lightning strike may not dissipate, may remain in the vicinity of the struck fasteners, and may be conducted into the substructure and possibly a fuel tank in the wing, where unwanted discharge or sparking may occur as the result of electrical arching, and/or hot plasma particles ejected from joints due to decomposition of material systems, leading to a potential ignition source.

Known systems and methods exist to prevent or mitigate discharge and effects from lightning strikes in aircraft composite wing fuel tanks and other aircraft composite structures. Such known systems and methods include the application of electrically insulating sealants and the use of fastener cap seals to cover metal fasteners in the aircraft composite wing fuel tanks, to contain the discharge in the fastened joint and direct it away from the fuel tank or other aircraft composite structures.

However, such known electrically insulating sealants may be heavy, and such known fastener seal caps may be numerous in number, and both may add weight to the aircraft, which may result in reduced performance and increased fuel consumption, and, in turn, may result in increased fuel costs. Moreover, such known electrically insulating sealants and fastener seal caps may be time consuming and labor intensive to apply or install and inspect in the aircraft composite wings and fuel tanks, or other aircraft structures, which, in turn, may result in increased manufacturing and inspection time and increased labor costs.

In addition, known fasteners and fastener systems exist that achieve good electrical contact between composite aircraft structures, such as composite wing skins, and the metal fasteners used to secure such structures, and that reduce the potential for unwanted discharge or sparking in aircraft composite wing fuel tanks. Such known fasteners and fastener systems include the use of interference fit fasteners that employ a corrosion resistant steel (CRES) sleeve through which a tapered titanium bolt is inserted, i.e., sleeved interference fit fasteners. When torque is applied to a collar of the bolt, the sleeve expands, making contact with composite layers of the composite wing skin.

However, such sleeved interference fit fasteners may be expensive and difficult to install. Moreover, the CRES sleeves for the interference fit fasteners may add weight to the fastened joints, which may result in increased fuel consumption, and, in turn, may result in increased fuel costs. Further, due to the expansion of the fastener sleeve when torque is applied to the bolt collar, any exposed high conductivity carbon fiber tip in drilled holes, in which the fasteners are inserted, may be crushed, damaged, or possibly broken. This may limit the overall electrical connection and may also promote micro-cracks in the fastened joints of the composite structure.

Accordingly, there is a need in the art for an improved fastener, fastener system, and method that is inexpensive, simple to install and use, weight saving, and reliable, and that provide advantages over known fastener devices, systems and methods.

US2013330145, in accordance with its abstract, states a hybrid fastener is provided in combination with a structural insert. The insert is disposed about a shank of the fastener at an unthreaded section. In another aspect, a sleeve surrounds the shank of the fastener and has apertures for receiving the insert therethrough. Methods of using the above-described hybrid fastener for securing workpieces are also disclosed.

DE3545849, in accordance with its abstract, states for a sealable screw connection comprising essentially a screw bolt and a nut, DE3545849 proposes that the bolt and/or the nut have channels which are arranged such that a flowable composition, sealing composition, can be pressed, after the connection has been screwed tight, into cavities located within the connection. In this arrangement, the bearing surface of the screw head and/or of the nut may have radial grooves.

GB2226801, in accordance with its abstract, states a screw fastener assembly for attaching one component of an aircraft structure to another, comprising a male threaded member for passing through a hole in a first component of an aircraft and co-operating with a second female threaded member adapted to engage a second component of the aircraft structure, wherein there is provided means for venting hot gaseous spark products generated at the interface between the first and second components of the aircraft structure and the male threaded member in the event of a lightning strike to the aircraft structure in the region of the screw fastener assembly either to the outside of the aircraft structure or to an enclosed ballast volume forming part of the female threaded member.

### SUMMARY

There is described herein a fastener comprising:
an elongated shaft having a first end, a second end, and a shaft body disposed between the first end and the second end;
a head portion disposed at the first end;
a threaded portion disposed at the second end;
at least one inner feed channel extending from an opening in the head portion, through the head portion and the shaft body, along a longitudinal central axis of the elongated shaft, and terminating proximal to the threaded portion;
a plurality of flutes formed along and circumferentially spaced around an outer surface of the shaft body and an outer surface of the head portion, each flute having a first end extending from a first location proximal to the threaded portion, along the outer surface of the shaft body, and radially outward along the outer surface of the head portion; and
one or more lateral feed channels formed laterally through the shaft body, each lateral feed channel connecting the inner feed channel to at least two opposing flutes on the outer surface of the shaft body.

Example implementations of this disclosure provide an improved fastener, fastener system, and method for composite structures, such as carbon fiber reinforced plastic (CFRP) structures, and CFRP structures attached to metallic structures. As discussed in the below detailed description, embodiments of the improved fastener, fastener system, and method may provide significant advantages over known fastener devices, systems, and methods.

In one example of the present disclosure there is provided a fastener. The fastener comprises an elongated shaft having a first end, a second end, and a shaft body disposed between the first end and the second end. The fastener further comprises a head portion disposed at the first end. The fastener further comprises a threaded portion disposed at the second end.

The fastener further comprises at least one inner feed channel extending from an opening in the head portion, through the head portion and the shaft body, along a longitudinal central axis of the elongated shaft, and terminating proximal to the threaded portion. The fastener further comprises a plurality of flutes formed along and circumferentially spaced around an outer surface of the shaft body and an outer surface of the head portion. Each flute has a first end extending from a first location proximal to the threaded portion, along the outer surface of the shaft body, and radially outward along the outer surface of the head portion.

The fastener further comprises one or more lateral feed channels formed laterally through the shaft body. Each lateral feed channel connects the inner feed channel to at least two opposing flutes on the outer surface of the shaft body.

In another example of the present disclosure there is provided a fastener system for providing improved electrical contact with a composite structure. The fastener system comprises one or more fasteners configured for installation in one or more corresponding fastener holes formed in the composite structure.

Each fastener comprises an elongated shaft having a first end with a head portion, a second end with a threaded portion, and a shaft body disposed between the first end and the second end. Each fastener further comprises at least one inner central feed channel extending from an opening in the head portion, through the head portion and the shaft body, along a longitudinal central axis of the elongated shaft, and terminating proximal to the threaded portion.

Each fastener further comprises a plurality of flutes formed along and circumferentially spaced around an outer surface of the shaft body and an outer surface of the head portion. Each flute extends from a first location proximal to the threaded portion, along the outer surface of the shaft body, and radially outward along the outer surface of the head portion. Each fastener further comprises one or more lateral feed channels formed laterally through the shaft body. Each lateral feed channel connects the inner central feed channel to at least two opposing flutes on the outer surface of the shaft body.

The fastener system further comprises an injection tool assembly configured for coupling to each of the one or more fasteners installed in the one or more corresponding fastener holes. The fastener system further comprises a conductive fluid injected via the injection tool assembly into each fastener installed in the composite structure. The conductive fluid is transported and deposited via the at least one inner central feed channel, the one or more lateral feed channels, and the plurality of flutes of each fastener, to one or more areas between an outer surface of the fastener and an inner surface of a corresponding fastener hole of the composite structure.

The conductive fluid provides electrical contact between carbon fibers of the composite structure and the one or more fasteners installed in the one or more corresponding fastener holes of the composite structure. This results in the fastener system providing electrical contact with the composite structure.

In another example of the present disclosure there is provided a method for providing to a composite structure of an aircraft improved electrical conductivity and dissipation of current energy resulting from lightning strikes to the aircraft. The method comprises the step of installing one or more fasteners into one or more corresponding fastener holes formed in the composite structure.

Each fastener comprises an elongated shaft having a first end with a head portion, a second end with a threaded portion, and a shaft body disposed therebetween. Each fastener further comprises at least one inner feed channel extending from an opening in the head portion, through the head portion and the shaft body, along a longitudinal central axis of the elongated shaft, and terminating proximal to the threaded portion.

Each fastener further comprises a plurality of flutes formed along and circumferentially spaced around an outer surface of the shaft body and an outer surface of the head portion. Each flute extends from a first location proximal to the threaded portion, along the outer surface of the shaft body, and radially outward along the outer surface of the head portion.

Each fastener further comprises one or more lateral feed channels formed laterally through the shaft body. Each lateral feed channel connects the inner feed channel to at least two opposing flutes on the outer surface of the shaft body.

The method further comprises the step of torquing the one or more fasteners in place in the one or more corresponding fastener holes. The method further comprises the step of injecting, under pressure, a conductive fluid into the opening in the head portion of each fastener, and through the at least one inner feed channel and the one or more lateral feed channels.

The method further comprises the step of depositing the conductive fluid to one or more areas between an outer surface of each fastener and an inner surface of each corresponding fastener hole of the composite structure. The method further comprises the step of curing the composite structure with the one or more fasteners installed in the composite structure.

The method further comprises the step of providing electrical contact between carbon fibers of the composite structure and each fastener installed in each corresponding fastener hole, to obtain electrical conductivity and dissipation of current energy, resulting from lightning strikes to the aircraft.

The features, functions, and advantages that have been discussed can be achieved independently in various embodiments of the disclosure or may be combined in yet other embodiments further details of which can be seen with reference to the following description and drawings.

### BRIEF DESCRIPTION OF THE DRAWINGS

The disclosure can be better understood with reference to the following detailed description taken in conjunction with the accompanying drawings which illustrate exemplary embodiments, but which are not necessarily drawn to scale, wherein:
FIG. 1A is an illustration of a side perspective view of an exemplary embodiment of a fastener of the disclosure;
FIG. 1B is an illustration of a cutaway side perspective view of the fastener of FIG. 1A;
FIG. 1C is an illustration of a cross-sectional view of the fastener of FIG. 1A, taken along lines 1C-1C of FIG. 1A;
FIG. 1D is an illustration of a top view of the fastener of FIG. 1A;
FIG. 1E is an illustration of a bottom view of the fastener of FIG. 1A;
FIG. 2A is an illustration of a side perspective view of another exemplary embodiment of a fastener of the disclosure;
FIG. 2B is an illustration of a cutaway side perspective view of the fastener of FIG. 2A;
FIG. 2C is an illustration of a cross-sectional view of the fastener of FIG. 2A, taken along lines 2C-2C of FIG. 2A;
FIG. 2D is an illustration of a top view of the fastener of FIG. 2A;
FIG. 2E is an illustration of a bottom view of the fastener of FIG. 2A;
FIG. 3A is an illustration of a side perspective view of yet another exemplary embodiment of a fastener of the disclosure;
FIG. 3B is an illustration of a cutaway side perspective view of the fastener of FIG. 3A;
FIG. 3C is an illustration of a top view of the fastener of FIG. 3A;
FIG. 3D is an illustration of a bottom view of the fastener of FIG. 3A;
FIGS. 4A-4G are illustrations of cross-sectional views of lateral feed channel configurations that may be used in embodiments of the fastener of the disclosure;
FIG. 5A is an illustration of a cutaway side perspective view of an embodiment of a fastener system of the disclosure;
FIG. 5B is an illustration of a side perspective view of the fastener system of FIG. 5A;
FIG. 6 is an illustration of a cutaway side perspective view of another embodiment of a fastener system of the disclosure;
FIG. 7A is a schematic diagram of a partial sectional view of an embodiment of a fastener system of the disclosure showing the fastener installed in a composite structure having a corresponding fastener hole with a rough surface and conductive fluid injected into the fastener;
FIG. 7B is a schematic diagram of a partial sectional view of the fastener system of FIG. 7A showing the fastener after conductive fluid injection and after cure;
FIG. 8 is a flow diagram showing an exemplary embodiment of a method of the disclosure;
FIG. 9 is an illustration of a perspective view of an aircraft that may incorporate composite structures having one or more embodiments of a fastener of the disclosure;
FIG. 10 is a flow diagram of an aircraft manufacturing and service method; and, FIG. 11 is a block diagram of an aircraft.

Each figure shown in this disclosure shows a variation of an aspect of the embodiments presented, and only differences will be discussed in detail.

### DETAILED DESCRIPTION

Disclosed embodiments will now be described more fully hereinafter with reference to the accompanying drawings, in which some, but not all of the disclosed embodiments are shown. Indeed, several different embodiments may be provided and should not be construed as limited to the embodiments set forth herein. Rather, these embodiments are provided so that this disclosure will be thorough and fully convey the scope of the disclosure to those skilled in the art.

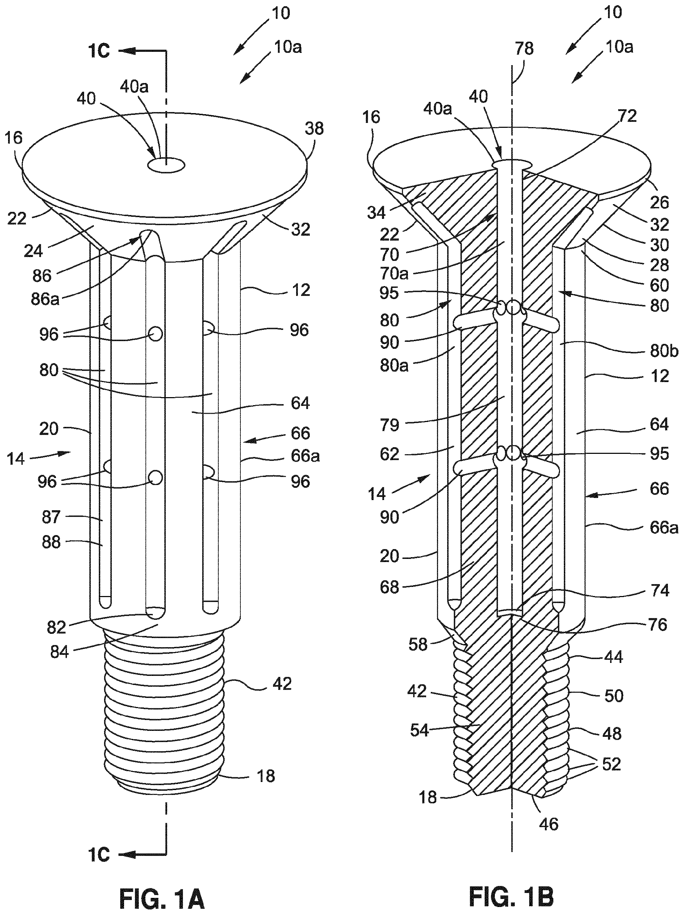

Now referring to the Figures, in one embodiment there is provided a fastener 10 as shown in FIGS. 1A-1E. FIG. 1A is an illustration of a side perspective view of an exemplary embodiment of the fastener 10, such as in the form of fastener 10a, of the disclosure. Preferably the fastener 10 (see FIG. 1A), such as in the form of fastener 10a (see FIG. 1A), comprises a conformal clearance fit fastener 12 (see FIG. 1A) that is sleeveless, i.e., does not require a metal sleeve.

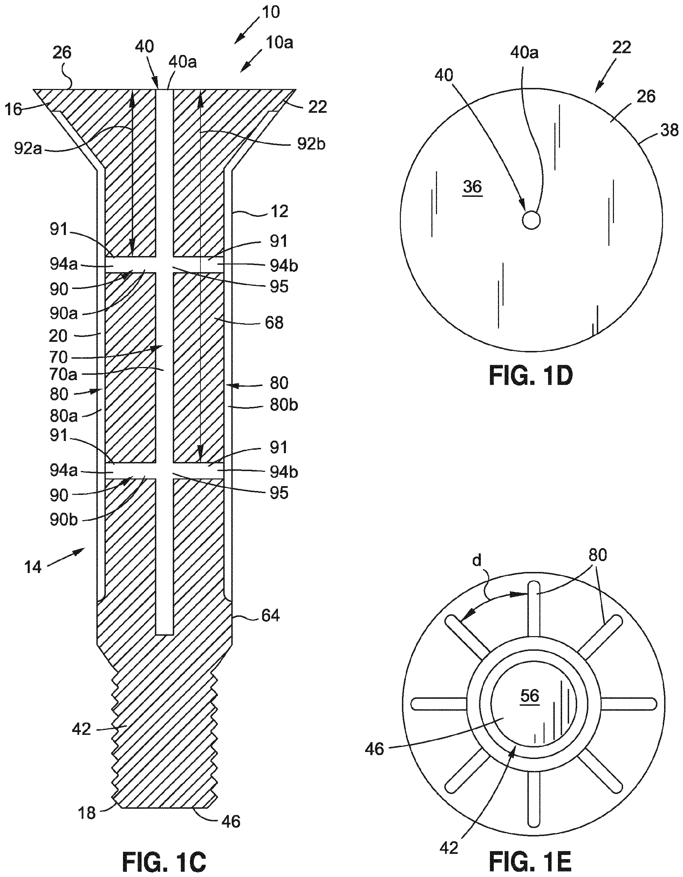

FIG. 1B is an illustration of a cutaway side perspective view of the fastener 10, such as in the form of fastener 10a, of FIG. 1A. FIG. 1C is an illustration of a cross-sectional view of the fastener 10, such as in the form of fastener 10a, of FIG. 1A, taken along lines 1C-1C of FIG. 1A.

As shown in FIGS. 1A-1C, the fastener 10, such as in the form of fastener 10a, comprises an elongated shaft 14 having a first end 16, a second end 18, and a shaft body 20 disposed between the first end 16 and the second end 18. As further shown in FIGS. 1A-1C, the fastener 10, such as in the form of fastener 10a, has a head portion 22 disposed at the first end 16. The head portion 22 (see FIG. 1A) preferably has a frusto-conical shape 24 (see FIG. 1A). However, the head portion 22 (see FIG. 1A) may have another suitable shape as well. As shown in FIG. 1B, the head portion 22 has a top end 26, a bottom end 28, and a central portion 30 with an outer surface 32 (see also FIG. 1A) and an interior 34.

FIG. 1D is an illustration of a top view of the fastener 10, such as in the form of fastener 10a, of FIG. 1A. FIG. 1D shows the top end 26 of the head portion 22 having a top surface 36, which is flat or substantially flat. As shown in FIG. 1D, the top end 26 of the head portion 22 has an outer periphery 38 (see also FIG. 1A) or perimeter and has an opening 40. Preferably, the opening 40 (see FIGS. 1A-1D) is a central opening 40a (see FIGS. 1A-1D).

As shown in FIGS. 1A-1C, the fastener 10, such as in the form of fastener 10a, has a threaded portion 42 disposed at the second end 18 of the elongated shaft 14. As shown in FIG. 1B, the threaded portion 42 has a top end 44, a bottom end 46, and a central portion 48 with an outer surface 50 comprised of a plurality of threads 52. As shown in FIG. 1B, the threaded portion 42 has an interior 54, which is preferably solid and has no openings or voids.

FIG. 1E is an illustration of a bottom view of the fastener 10, such as in the form of fastener 10a, of FIG. 1A. FIG. 1E shows the bottom end 46 of the threaded portion 42 having a bottom surface 56, which is flat or substantially flat.

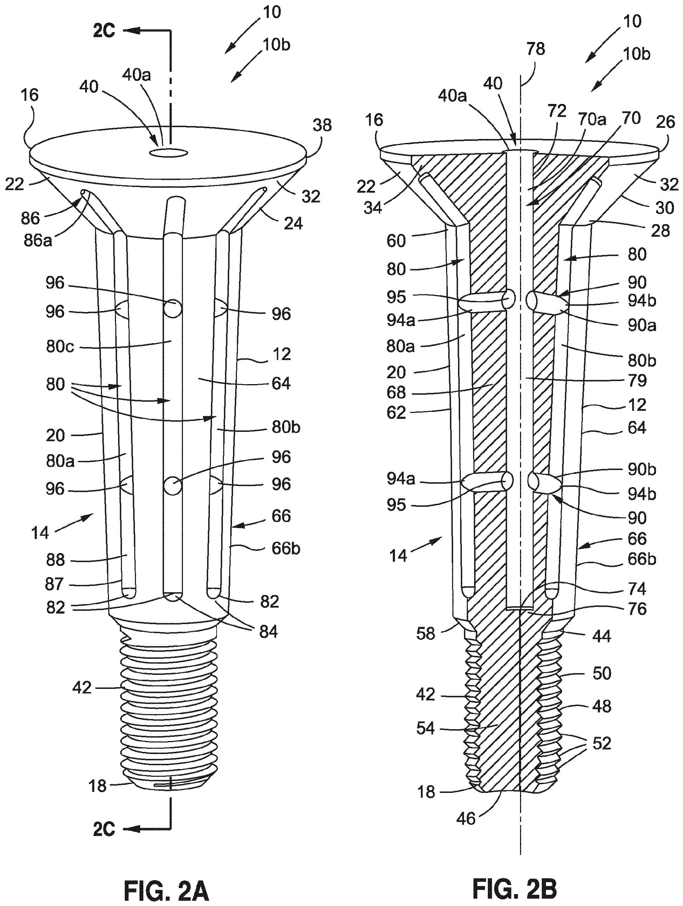

As shown in FIG. 1B, the shaft body 20 of the elongated shaft 14 has a first end 58 integrally joined or connected to the top end 44 of the threaded portion 42, has a second end 60 integrally joined or connected to the bottom end 28 of the head portion 22, and has a central portion 62 disposed between the first end 58 and the second end 60. The shaft body 20 (see FIGS. 1A-1B) has an outer surface 64 (see FIGS. 1A-1B) with an outer profile 66 (see FIGS. 1A-1B). In one embodiment, as shown in FIGS. 1A-1B, the shaft body 20 may have a substantially straight outer profile 66a. In another embodiment, as shown in FIG. 2A, discussed below, the shaft body 20 may have a tapered outer profile 66b. As shown in FIG. 1B, the central portion 62 of the shaft body 20 has an interior 68.

As shown in FIGS. 1B-1C, the fastener 10, such as in the form of fastener 10a, further comprises at least one inner feed channel 70. As shown in FIG. 1B, the inner feed channel 70 may be in the form of an inner central feed channel 70a. As further shown in FIG. 1B, the inner feed channel 70, such as in the form of inner central feed channel 70a, has a first end 72 and a second end 74. As further shown in FIG. 1B, the inner feed channel 70, such as in the form of inner central feed channel 70a, extends at the first end 72 from the opening 40 in the head portion 22, through the interior 34 of the head portion 22 and through the interior 68 of the shaft body 20, and terminates at the second end 74 at a location 76 proximal to or near the threaded portion 42. As further shown in FIG. 1B, the inner feed channel 70, such as in the form of inner central feed channel 70a, extends along a longitudinal central axis 78 of the elongated shaft 14 and preferably has a hollow interior 79.

As shown in FIGS. 1A-1C, the fastener 10, such as in the form of fastener 10a, further comprises a plurality of flutes 80 formed along and circumferentially spaced around the outer surface 64 of the shaft body 20, and formed along and circumferentially spaced around the outer surface 32 of the head portion 22. As further shown in FIG. 1A, each flute 80 has a first end 82 extending from a first location 84 proximal to the threaded portion 42, along the outer surface 64 of the shaft body 20, and radially outward along the outer surface 32 of the head portion 22. Preferably, the flutes 80 (see FIG. 1A) are elongated and spaced apart from each other, and preferably each flute 80 (see FIG. 1A) runs continuously along the outer surface 64 (see FIG. 1A) of the shaft body 20 (see FIG. 1A) and the outer surface 32 (see FIG. 1A) of the head portion 22 (see FIG. 1A).

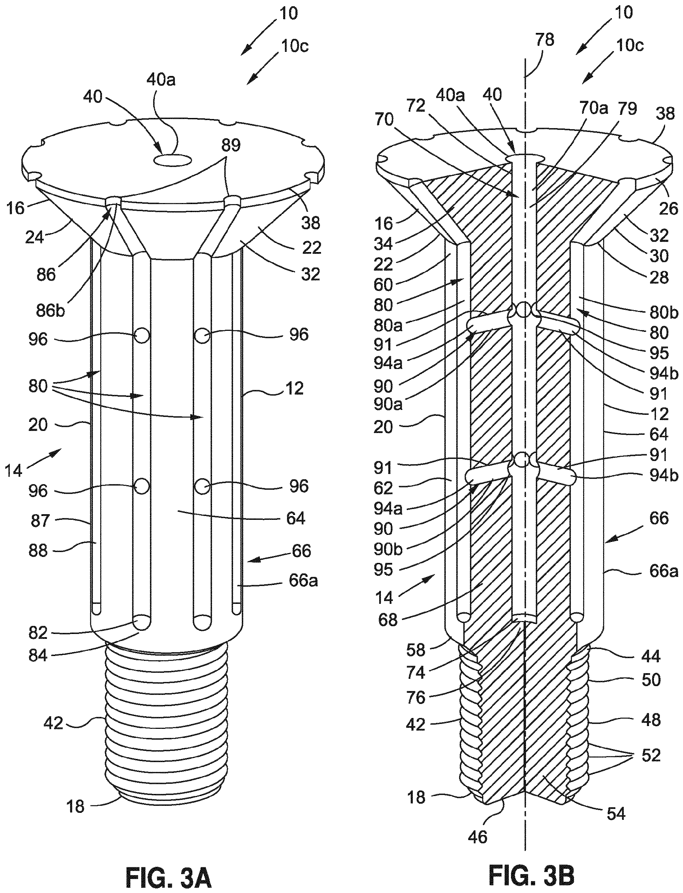

As shown in FIG. 1A, each flute 80 may extend radially outward along the outer surface 32 of the head portion 22 and terminate at a second end 86. In one embodiment, as shown in FIG. 1A, the second end 86 comprises a second location 86a proximal to the outer periphery 38 of the head portion 22. In another embodiment, as shown in FIG. 3A, discussed below, the second end 86 comprises a periphery opening 86b at the outer periphery 38 of the head portion 22. As shown in FIG. 1A, each flute 80 may preferably be formed as a longitudinal groove 87 having a shallow, curved interior surface 88.

As shown in FIG. IE, the plurality of flutes 80 are preferably circumferentially spaced an equal distance d apart from each other. As further shown in FIG. IE, the number of flutes 80 is eight (8). However, another suitable number of flutes 80 (see FIGS. 1A, 1E) may also be formed on the fastener 10 (see FIG. 1A).

As shown in FIGS. 1B-1C, the fastener 10, such as in the form of fastener 10a, further comprises one or more lateral feed channels 90 or inner cross channels formed laterally through the interior 68 of the shaft body 20. As shown in FIGS. 1B-1C, each lateral feed channel 90 connects the inner feed channel 70, such as in the form of inner central feed channel 70a, to at least two opposing flutes 80 on the outer surface 64 of the shaft body 20. Each lateral feed channel 90 (see FIG. 1C) may preferably comprise lateral feed channel portions 91 (see FIG. 1C), such as two lateral feed channel portions 91 (see FIG. 1C).

Preferably, the shaft body 20, as shown in FIG. 1C, has at least two sets 90a, 90b of the one or more lateral feed channels 90 formed laterally through the shaft body 20. As shown in FIGS. 1C, one set 90a of lateral feed channels 90 and the other set 90b of lateral feed channels 90 are spaced apart from each other a suitable distance. Preferably, the two sets 90a, 90b (see FIG. 1C) of the one or more lateral feed channels 90 (see FIG. 1C) are each spaced a different distance from the top end 26 (see FIG. 1C) of the head portion 22 (see FIG. 1C). For example, as shown in FIG. 1C, set 90a of lateral feed channels 90 may be formed laterally through the shaft body 20 at a first distance 92a from the top end 26 of the head portion 22, and set 90b of lateral feed channels 90 may be formed laterally through the shaft body 20 at a second distance 92b from the top end 26 of the head portion 22. The shaft body 20 (see FIGS. 1B-1C) may also have more than two sets of the lateral feed channels 90 or may have just one set of lateral feed channels 90.

As shown in FIG. 1C, the lateral feed channel 90 of the set 90a and the lateral feed channel 90 of the set 90b preferably each have a first end 94a that opens into or connects with flute 80a, preferably each have a second end 94b that opens into or connects with flute 80b, which is opposite to flute 80a, and preferably each have a central interior 95 that intersects or connects with the inner feed channel 70, such as in the form of inner central feed channel 70a. For each set of the lateral feed channels 90 (see FIGS. 1B-1C), the number of lateral feed channels 90 (see FIGS. 1B-1C) that may be formed in each set may be the same or may be different. Each flute 80 (see FIG. 1A) shows openings 96 (see FIG. 1A) formed by the lateral feed channels 90 (see FIG. 1B) intersecting with the flutes 80 (see FIG. 1A).

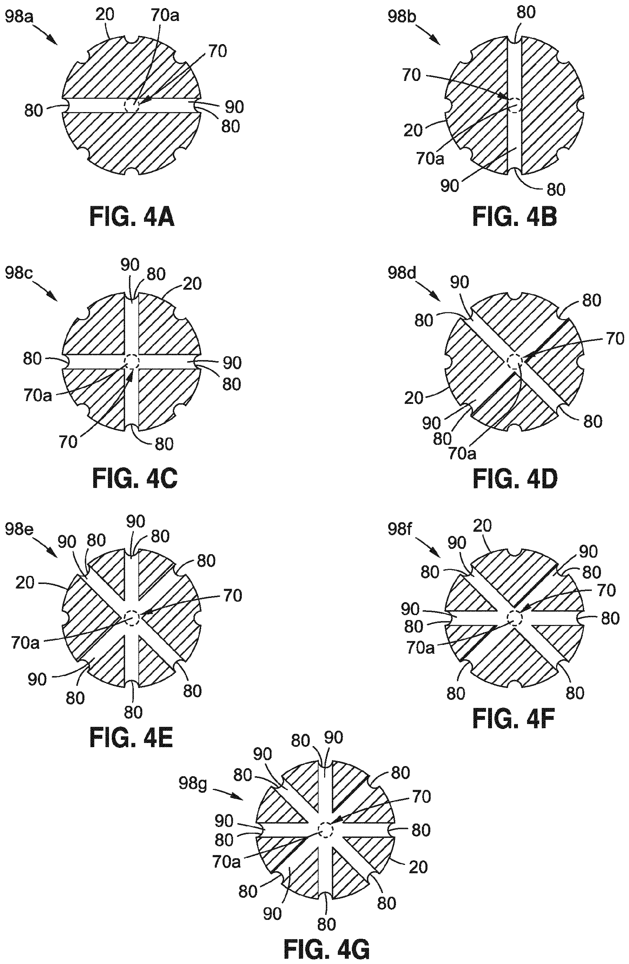

Exemplary lateral feed channel configurations 98 that may be formed in embodiments of the fastener 10 of the disclosure are shown in FIGS. 4A-4G, and are discussed in more detail below.

Now referring to FIGS. 2A-2E, another exemplary embodiment of the fastener 10, such as in the form of fastener 10b, is shown. FIG. 2A is an illustration of a side perspective view of the exemplary embodiment of the fastener 10, such as in the form of fastener 10b, of the disclosure. As shown in FIG. 2A, in this embodiment of the fastener 10, such as in the form of fastener 10b, the shaft body 20 has a tapered outer profile 66b, and not all of the flutes 80 have openings 96 formed by the lateral feed channels 90 intersecting with the flutes 80. Preferably the fastener 10 (see FIG. 2A), such as in the form of fastener 10b (see FIG. 2A), comprises a conformal clearance fit fastener 12 (see FIG. 2A) that is sleeveless.

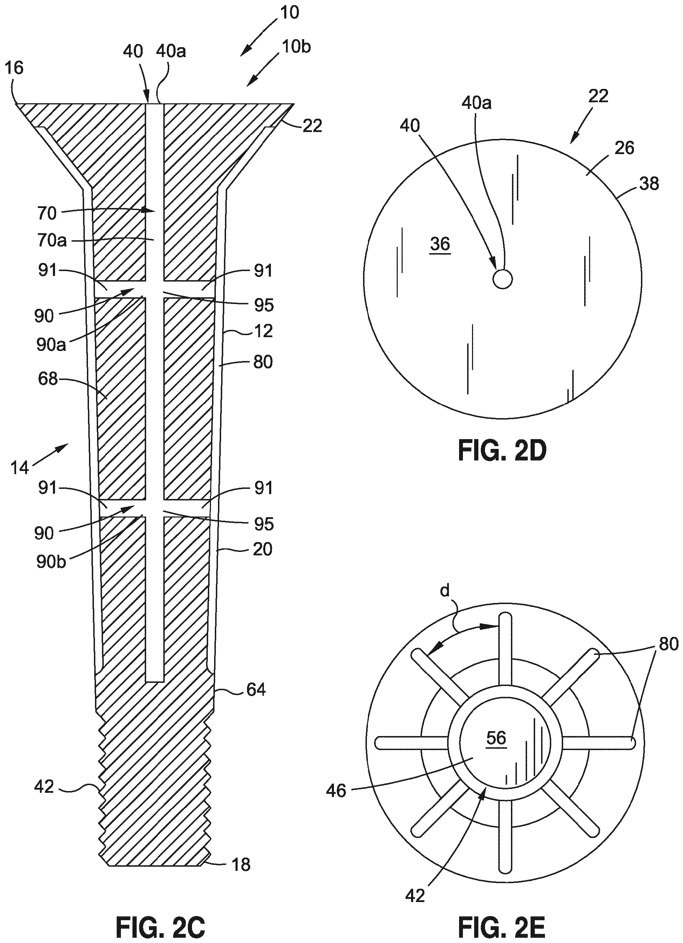

FIG. 2B is an illustration of a cutaway side perspective view of the fastener 10, such as in the form of fastener 10b, of FIG. 2A. FIG. 2C is an illustration of a cross-sectional view of the fastener 10, such as in the form of fastener 10b, of FIG. 2A, taken along lines 2C-2C of FIG. 2A.

As shown in FIGS. 2A-2C, the fastener 10, such as in the form of fastener 10b, comprises the elongated shaft 14 having the first end 16, the second end 18, and the shaft body 20 disposed between the first end 16 and the second end 18. As further shown in FIGS. 2A-2C, the fastener 10, such as in the form of fastener 10b, has the head portion 22 disposed at the first end 16. As shown in FIG. 2A, the head portion 22 preferably has the frusto-conical shape 24. As shown in FIG. 2B, the head portion 22 has the top end 26, the bottom end 28, and the central portion 30 with the outer surface 32 (see also FIG. 2A) and the interior 34.

FIG. 2D is an illustration of a top view of the fastener 10, such as in the form of fastener 10b, of FIG. 2A. FIG. 2D shows the top end 26 of the head portion 22 having the top surface 36, which is flat or substantially flat. As shown in FIG. 2D, the top end 26 of the head portion 22 has the outer periphery 38 (see also FIG. 2A) or perimeter and has the opening 40. Preferably, the opening 40 (see FIGS. 2A-2D) is the central opening 40a (see FIGS. 2A-2D).

As shown in FIGS. 2A-2C, the fastener 10, such as in the form of fastener 10b, has the threaded portion 42 disposed at the second end 18 of the elongated shaft 14. As shown in FIG. 2B, the threaded portion 42 has the top end 44, the bottom end 46, and the central portion 48 with the outer surface 50 comprised of the plurality of threads 52. As further shown in FIG. 2B, the threaded portion 42 has an interior 54 which is preferably solid and has no openings or voids.

FIG. 2E is an illustration of a bottom view of the threaded portion 42 of the fastener 10, such as in the form of fastener 10b, of FIG. 2A. FIG. 2E shows the bottom end 46 of the threaded portion 42 having the bottom surface 56, which is flat or substantially flat.

As shown in FIG. 2B, the shaft body 20 of the elongated shaft 14 has the first end 58 integrally joined or connected to the top end 44 of the threaded portion 42, has the second end 60 integrally joined or connected to the bottom end 28 of the head portion 22, and has the central portion 62 disposed between the first end 58 and the second end 60. As shown in FIGS. 2A-2B, the shaft body 20 has the outer surface 64 with the outer profile 66 in the form of the tapered outer profile 66b. As shown in FIG. 2B, the central portion 62 of the shaft body 20 has the interior 68.

As shown in FIGS. 2B-2C, the fastener 10, such as in the form of fastener 10b, further comprises at least one inner feed channel 70, such as in the form of inner central feed channel 70a. As shown in FIG. 2B, the inner feed channel 70, such as in the form of inner central feed channel 70a, has the first end 72 and the second end 74. As shown in FIG. 2B, the inner feed channel 70, such as in the form of inner central feed channel 70a, extends at the first end 72 from the opening 40 in the head portion 22, through the interior 34 of the head portion 22 and through the interior 68 of the shaft body 20, and terminates at the second end 74 at a location 76 proximal to or near the threaded portion 42. As further shown in FIG. 2B, the inner feed channel 70, such as in the form of inner central feed channel 70a, extends along the longitudinal central axis 78 of the elongated shaft 14 and preferably has the hollow interior 79.

As shown in FIGS. 2A-2C, the fastener 10, such as in the form of fastener 10b, further comprises the plurality of flutes 80 formed along and circumferentially spaced around the outer surface 64 of the shaft body 20, and formed along and circumferentially spaced around the outer surface 32 of the head portion 22. As further shown in FIG. 2A, each flute 80 has the first end 82 extending from the first location 84 proximal to the threaded portion 42, along the outer surface 64 of the shaft body 20, and radially outward along the outer surface 32 of the head portion 22. Preferably, the flutes 80 (see FIG. 2A) are elongated and spaced apart from each other, and preferably each flute 80 (see FIG. 2A) runs continuously along the outer surface 64 (see FIG. 2A) of the shaft body 20 (see FIG. 2A) and the outer surface 32 (see FIG. 2A) of the head portion 22 (see FIG. 2A).

As shown in FIG. 2A, each flute 80 may extend radially outward along the outer surface 32 of the head portion 22 and terminate at the second end 86. As shown in FIG. 2A, the second end 86 comprises the second location 86a proximal to the outer periphery 38 of the head portion 22. As shown in FIG. 2A, each flute 80 may preferably be formed as a longitudinal groove 87 having a shallow, curved interior surface 88.

As shown in FIG. 2E, the plurality of flutes 80 are preferably circumferentially spaced an equal distance d apart from each other. As further shown in FIG. 2E, the number of flutes 80 is eight (8). However, another suitable number of flutes 80 (see FIGS. 2A, 2E) may also be formed on the fastener 10 (see FIG. 2A).

As shown in FIGS. 2B-2C, the fastener 10, such as in the form of fastener 10b, further comprises one or more lateral feed channels 90 formed laterally through the interior 68 of the shaft body 20. As shown in FIGS. 2B-2C, each lateral feed channel 90 connects the inner feed channel 70, such as in the form of inner central feed channel 70a, to at least two opposing flutes 80 on the outer surface 64 of the shaft body 20. Each lateral feed channel 90 (see FIG. 2C) may preferably comprise lateral feed channel portions 91 (see FIG. 2C), such as two lateral feed channel portions 91 (see FIG. 2C).

Preferably, the shaft body 20, as shown in FIG. 2B, has at least two sets 90a, 90b of the one or more lateral feed channels 90. As shown in FIG. 2B, one set 90a of lateral feed channels 90 and the other set 90b of lateral feed channels 90 are spaced apart from each other a suitable distance. Preferably, each set 90a, 90b of the one or more lateral feed channels 90 is spaced a different distance from the top end 26 of the head portion 22. For example, set 90a (see FIG. 2B) of lateral feed channels 90 (see FIG. 2B) may be formed laterally through the interior 68 (see FIG. 2B) of the shaft body 20 (see FIG. 2B) at a first distance 92a (see FIG. 1C) from the top end 26 (see FIGS. 1C, 2B) of the head portion 22 (see FIGS. 1C, 2B), and set 90b (see FIG. 2B) of lateral feed channels 90 (see FIG. 2B) may be formed laterally through the interior 68 (see FIG. 2B) of the shaft body 20 (see FIG. 2B) at a second distance 92b (see FIG. 1C) from the top end 26 (see FIGS. 1C, 2B) of the head portion 22 (see FIGS. 1C, 2B). The shaft body 20 (see FIG. 2B) may also have more than two sets of the lateral feed channels 90 or may have just one set of lateral feed channels 90.

As shown in FIG. 2B, the lateral feed channels 90 of set 90a and of set 90b may each have the first end 94a that opens into or connects with flute 80a, and may each have the second end 94b that opens into or connects with flute 80b, which is opposite to flute 80a, and preferably have the central interior 95 that intersects or connects with the inner feed channel 70, such as in the form of inner central feed channel 70a. For each set of the lateral feed channels 90 (see FIG. 2B), the number of lateral feed channels 90 (see FIG. 2B) that may be formed in each set may be the same or may be different. As shown in FIG. 2A, for example, flutes 80a, 80b, 80c, each have openings 96 formed by the lateral feed channels 90 (see FIG. 2B) intersecting with the flutes 80a, 80b, 80c.

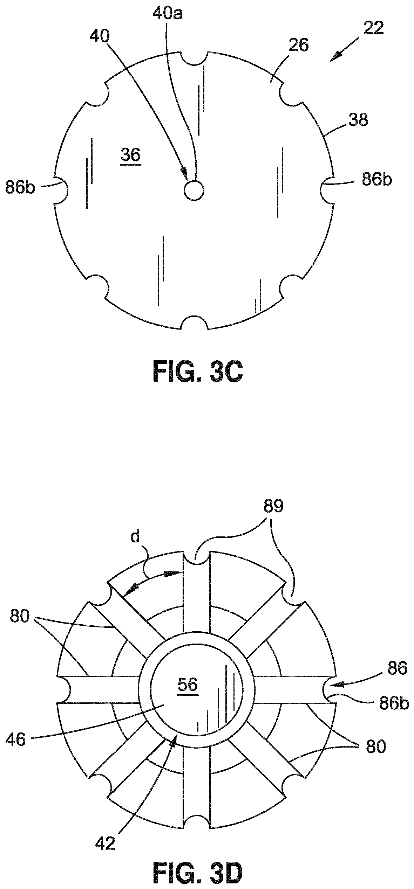

Now referring to FIGS. 3A-3D, another exemplary embodiment of the fastener 10, such as in the form of fastener 10c, is shown. FIG. 3A is an illustration of a side perspective view of the exemplary embodiment of the fastener 10, such as in the form of fastener 10c, of the disclosure. In this embodiment, as shown in FIG. 3A, the fastener 10, such as in the form of fastener 10c, in addition to the inner feed channel 70, such as in the form of inner central feed channel 70a, has the plurality of flutes 80 each having a second end 86 comprising a periphery opening 86b at the outer periphery 38 of the head portion 22. Thus, the periphery openings 86 (see FIG. 3A) and the plurality of flutes 80 (see FIG. 3A) function as radial feed channels 89 (see FIGS. 3A, 3D) in addition to the inner feed channel 70 (see FIG. 3B), such as in the form of inner central feed channel 70a (see FIG. 3B). Preferably the fastener 10 (see FIG. 3A), such as in the form of fastener 10c (see FIG. 3A), comprises a conformal clearance fit fastener 12 (see FIG. 3A) that is sleeveless.

FIG. 3B is an illustration of a cutaway side perspective view of the fastener 10, such as in the form of fastener 10c, of FIG. 3A. FIG. 3C is an illustration of a top view of the fastener 10, such as in the form of fastener 10c, of FIG. 3A. FIG. 3D is an illustration of a bottom view of the fastener 10, such as in the form of fastener 10c, of FIG. 3A.

As shown in FIGS. 3A-3B, the fastener 10, such as in the form of fastener 10c, comprises the elongated shaft 14 having the first end 16, the second end 18, and the shaft body 20 disposed between the first end 16 and the second end 18. As shown in FIG. 3A, the fastener 10, such as in the form of fastener 10c, has the head portion 22, preferably with the frusto-conical shape 24, disposed at the first end 16. As shown in FIG. 3B, the head portion 22 has the top end 26, the bottom end 28, and the central portion 30 with the outer surface 32 (see also FIG. 3A) and the interior 34.

FIG. 3C is an illustration of a top view of the fastener 10, such as in the form of fastener 10c, of FIG. 3A. FIG. 3C shows the top end 26 of the head portion 22 having the top surface 36, which is flat or substantially flat. As shown in FIG. 3C, the top end 26 of the head portion 22 has the outer periphery 38 (see also FIG. 3A), or perimeter, having the periphery openings 86b. As shown in FIG. 3C, there are eight (8) periphery openings 86b that correspond to the eight (8) flutes 80. However, there may be another suitable number of periphery openings 86b. The top end 26 (see FIGS. 3B-3C) of the head portion 22 (see FIGS. 3A-3B) has the opening 40 (see FIGS. 3A-3C), such as in the form of central opening 40a (see FIGS. 3A-3C).

As shown in FIGS. 3A-3B, the fastener 10, such as in the form of fastener 10c, has the threaded portion 42 disposed at the second end 18 of the elongated shaft 14. As shown in FIG. 3B, the threaded portion 42 has the top end 44, the bottom end 46, and the central portion 48 with the outer surface 50 comprised of the plurality of threads 52. As further shown in FIG. 3B, the threaded portion 42 has interior 54, which is preferably solid and has no openings or voids.

FIG. 3D is an illustration of a bottom view of the fastener 10, such as in the form of fastener 10c, of FIG. 3A. FIG. 3D shows the bottom end 46 of the threaded portion 42 having the bottom surface 56, which is flat or substantially flat.

As shown in FIG. 3B, the shaft body 20 of the elongated shaft 14 has the first end 58 integrally joined or connected to the top end 44 of the threaded portion 42, has the second end 60 integrally joined or connected to the bottom end 28 of the head portion 22, and has the central portion 62 disposed between the first end 58 and the second end 60. As shown in FIGS. 3A-3B, the shaft body 20 has the outer surface 64 with the outer profile 66 in the form of the substantially straight outer profile 66a. As shown in FIG. 3B, the central portion 62 of the shaft body 20 has the interior 68.

As shown in FIG. 3B, the fastener 10, such as in the form of fastener 10c, further comprises at least one inner feed channel 70, such as in the form of inner central feed channel 70a, having the first end 72 and the second end 74. As further shown in FIG. 3B, the inner feed channel 70, such as in the form of inner central feed channel 70a, extends at the first end 72 from the opening 40 in the head portion 22, through the interior 34 of the head portion 22 and through the interior 68 of the shaft body 20, and terminates at the second end 74 at a location 76 proximal to or near the threaded portion 42. As further shown in FIG. 3B, the inner feed channel 70, such as in the form of inner central feed channel 70a, extends along the longitudinal central axis 78 of the elongated shaft 14 and preferably has the hollow interior 79.

As shown in FIGS. 3A-3B, the fastener 10, such as in the form of fastener 10c, further comprises the plurality of flutes 80 formed along and circumferentially spaced around the outer surface 64 of the shaft body 20, and continuously formed along and circumferentially spaced around the outer surface 32 of the head portion 22. As further shown in FIG. 3A, each flute 80 has the first end 82 extending from the first location 84 proximal to the threaded portion 42, along the outer surface 64 of the shaft body 20, and radially outward along the outer surface 32 of the head portion 22. Preferably, the flutes 80 (see FIG. 3A) are elongated and spaced apart from each other, and preferably each flute 80 (see FIG. 3A) runs continuously along the outer surface 64 (see FIG. 3A) of the shaft body 20 (see FIG. 3A) and the outer surface 32 (see FIG. 3A) of the head portion 22 (see FIG. 3A).

As shown in FIG. 3A, each flute 80 may extend radially outward along the outer surface 32 of the head portion 22 and terminate at the second end 86. As shown in FIG. 3A, the second end 86 comprises the periphery opening 86b at the outer periphery 38 of the head portion 22. As shown in FIG. 3A, each flute 80 may preferably be formed as a longitudinal groove 87 having a shallow, curved interior surface 88.

As shown in FIG. 3D, the plurality of flutes 80 are preferably circumferentially spaced an equal distance d apart from each other. As further shown in FIG. 3D, the number of flutes 80 is eight (8). However, another suitable number of flutes 80 (see FIGS. 3A, 3D) may also be formed on the fastener 10 (see FIG. 3A).

As shown in FIG. 3B, the fastener 10, such as in the form of fastener 10c, further comprises one or more lateral feed channels 90 formed laterally through the interior 68 of the shaft body 20. As shown in FIG. 3B, each lateral feed channel 90 connects the inner feed channel 70, such as in the form of inner central feed channel 70a, to at least two opposing flutes 80 on the outer surface 64 of the shaft body 20. Each lateral feed channel 90 (see FIG. 3B) may preferably comprise lateral feed channel portions 91 (see FIG. 3B), such as two lateral feed channel portions 91 (see FIG. 3B).

Preferably, the shaft body 20, as shown in FIG. 3B, has at least two sets 90a, 90b of the one or more lateral feed channels 90. As shown in FIG. 3B, one set 90a of lateral feed channels 90 and the other set 90b of lateral feed channels 90 are preferably spaced apart from each other a suitable distance. Preferably, each set 90a, 90b (see FIG. 3B) of the one or more lateral feed channels 90 (see FIG. 3B) is spaced a different distance from the top end 26 (see FIG. 3B) of the head portion 22 (see FIG. 3B). For example, set 90a (see FIG. 3B) of lateral feed channels 90 (see FIG. 3B) may be formed laterally through the interior 68 of the shaft body 20 (see FIG. 3B) at a first distance 92a (see FIG. 1C) from the top end 26 (see FIGS. 1C, 3B) of the head portion 22 (see FIGS. 1C, 3B), and set 90b (see FIG. 3B) of lateral feed channels 90 (see FIG. 3B) may be formed laterally through the interior 68 (see FIG. 3B) of the shaft body 20 (see FIG. 3B) at a second distance 92b (see FIG. 1C) from the top end 26 (see FIGS. 1C, 3B) of the head portion 22 (see FIGS. 1C, 3B). The shaft body 20 (see FIG. 3B) may also have more than two sets of the lateral feed channels 90 or may have just one set of lateral feed channels 90.

As shown in FIG. 3B, the lateral feed channel 90 of set 90a and the lateral feed channel 90 of set 90b preferably each have a first end 94a that opens into or connects with flute 80a, preferably each have a second end 94b that opens into or connects with flute 80b, which is opposite to flute 80a, and preferably each have the central interior 95 that intersects or connects with the inner feed channel 70, such as in the form of inner central feed channel 70a. For each set of the lateral feed channels 90, the number of lateral feed channels 90 that may be formed in each set may be the same or may be different. As shown in FIG. 3A, each flute 80 shows openings 96 formed by the lateral feed channels 90 (see FIG. 3B) intersecting with the flutes 80.

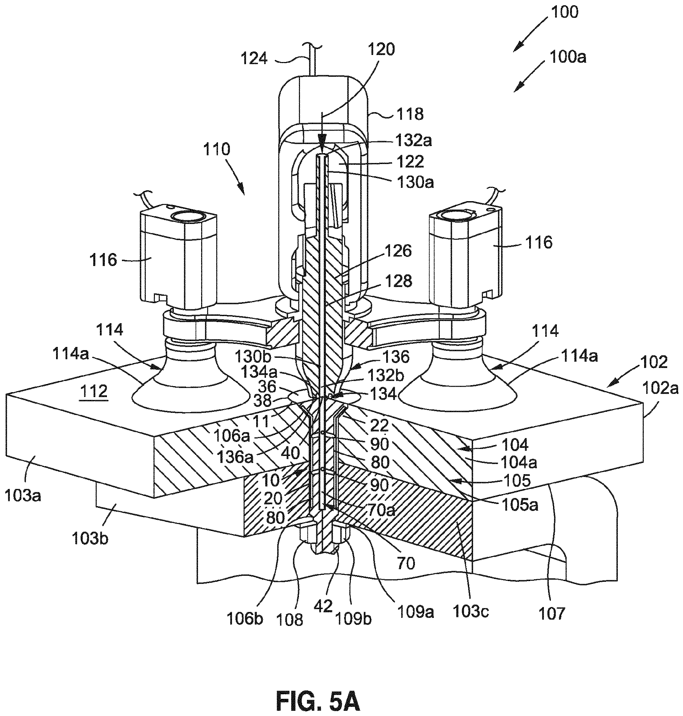

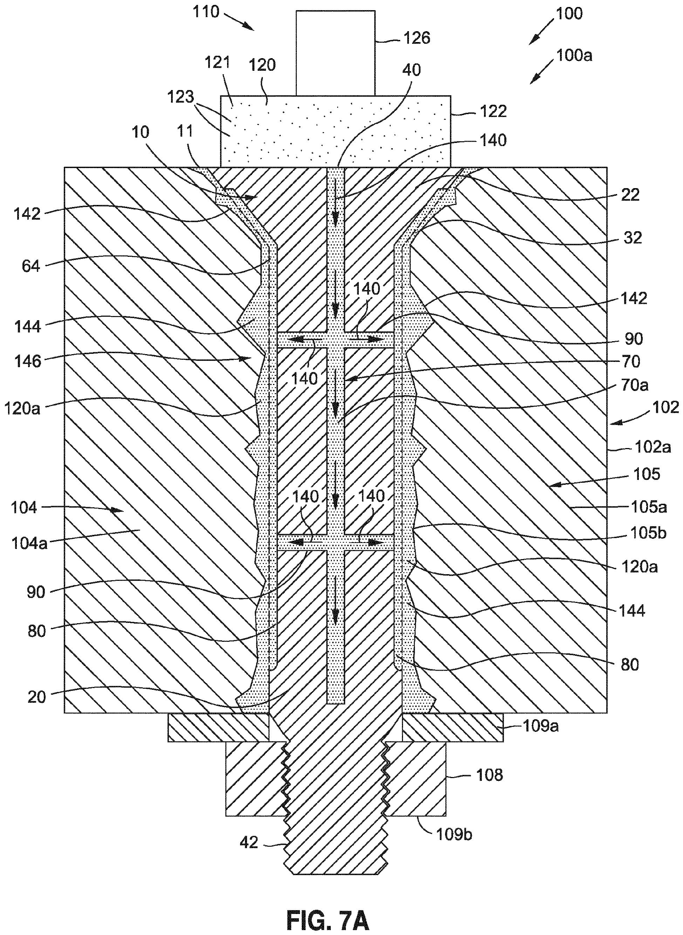

For the fastener 10 (see FIGS. 1A, 2A, 3A), the number of flutes 80 (see FIGS. 1A, 2A, 3A) formed on the fastener 10 (see FIGS. 1A, 2A, 3A), or chosen in the manufacture of the fastener 10 (see FIGS. 1A, 2A, 3A), may depend on such factors as the size of the fastener, the dimensions of the flute, the size of the corresponding fastener hole 11 (see FIG. 7A) that the fastener is inserted into, the type of injection tool assembly 110 (see FIGS. 5A, 6, 7A) used and the type of injection method used for injecting a conductive fluid 120 (see FIGS. 5A, 6, 7A) into the fastener, the type and viscosity/rheology of the conductive fluid 120 (see FIGS. 5A, 6, 7A) used to inject into the fastener, or other materials or manufacturing factors. Preferably, the fastener 10 (see FIGS. 1A, 2A, 3A) has at least two (2) flutes 80 (see FIGS. 1A, 2A, 3A), preferably opposed to each other, and more preferably, has more than two (2) flutes 80. As shown in FIGS. IE, 2E, 3D, the number of flutes 80 on the fastener 10 (see FIGS. 1A, 2A, 3A) is eight (8). However, another suitable number of flutes 80 may also be formed on the fastener 10.

For the fastener 10 (see FIGS. 1A, 2A, 3A), the number of lateral feed channels 90 (see FIGS. 1B, 2B, 3B) formed in the fastener 10 (see FIGS. 1A, 2A, 3A), or chosen in the manufacture of the fastener 10 (see FIGS. 1A, 2A, 3A), may also depend on such factors as the size of the fastener, the dimensions of the lateral feed channel, the size of the corresponding fastener hole 11 (see FIG. 7A) that the fastener is inserted into, the type of injection tool assembly 110 (see FIGS. 5A, 6, 7A) used and the type of injection method used for injecting the conductive fluid 120 (see FIGS. 5A, 6, 7A) into the fastener, the type and viscosity/rheology of the conductive fluid 120 (see FIGS. 5A, 6, 7A) used to inject into the fastener, or other materials or manufacturing factors. The purpose of the lateral feed channels 90 (see FIGS. 1B, 2B, 3B), or cross channels, is to facilitate the flow of the conductive fluid 120 (see FIGS. 5A, 6, 7A) in longer fasteners. The lateral feed channels 90 (see FIGS. 1B, 2B, 3B), or cross channels, may be designed to connect with all of the flutes 80, or selected flutes 80, at the various sets or levels depending on the length of the fastener. Preferably, the fastener 10 (see FIGS. 1A, 2A, 3A) has one or more lateral feed channels 90 (see FIGS. 1B, 2B, 3B), and one or more sets or levels of lateral feed channels 90 spaced apart from each other along the shaft body 20 (see FIGS. 1B, 2B, 3B) of the fastener 10 (see FIGS. 1B, 2B, 3B). As shown in FIGS. 1C, 2B, 3B, two (2) sets 90a, 90b or levels of lateral feed channels 90 are shown. However, another suitable number of sets or levels of lateral feed channels 90 may be formed in the fastener 10.

The fastener 10 (see FIGS. 1A, 2A, 3A) is a securement item designed to secure two or more items or structures together, and is preferably in the form of a bolt, a screw, a pin, or another suitable like fastener. The fastener 10 (see FIGS. 1A, 2A, 3A) is preferably constructed of carbon steel, titanium alloy, stainless steel, or another suitable hard metal or metal alloy material. Preferably, the fastener 10 (see FIGS. 1A, 2A, 3A) is of a one-piece, unitary, or monolithic configuration or construction. However, the fastener 10 may also be made or formed of one or more separate pieces or structures, i.e., separate head portion, separate shaft body, and/or separate threaded portion.

Now referring to FIGS. 4A-4G, FIGS. 4A-4G are illustrations of cross-sectional views of various lateral feed channel configurations 98 that may be used in embodiments of the fastener 10 (see FIGS. 1A, 2A, 3A) of the disclosure. FIG. 4A shows a cross-sectional view of a first lateral feed channel configuration 98a in the shaft body 20, having one lateral feed channel 90 that connects the inner feed channel 70, such as in the form of inner central feed channel 70a, to two opposing flutes 80 on the shaft body 20. FIG. 4B shows a cross-sectional view of a second lateral feed channel configuration 98b in the shaft body 20, having one lateral feed channel 90 that connects the inner feed channel 70, such as in the form of inner central feed channel 70a, to two opposing flutes 80 on the shaft body 20. The two opposing flutes 80 (see FIG. 4B) connected in the second lateral feed channel configuration 98b (see FIG. 4B) are different flutes 80 (see FIG. 4B) than the two opposing flutes 80 (see FIG. 4A) connected in the first lateral feed channel configuration 98a (see FIG. 4A).

FIG. 4C shows a cross-sectional view of a third lateral feed channel cross-shaped configuration 98c in the shaft body 20, having two lateral feed channels 90 that each connect the inner feed channel 70, such as in the form of inner central feed channel 70a, to two opposing flutes 80 on the shaft body 20. FIG. 4D shows a cross-sectional view of a fourth lateral feed channel X-shaped configuration 98d in the shaft body 20, having two lateral feed channels 90 that each connect the inner feed channel 70, such as in the form of inner central feed channel 70a, to two opposing flutes 80 on the shaft body 20. The two sets of opposing flutes 80 (see FIG. 4D) connected in the fourth lateral feed channel X-shaped configuration 98d (see FIG. 4D) are different flutes 80 (see FIG. 4D) than the two sets of opposing flutes 80 (see FIG. 4C) connected in the third lateral feed channel cross-shaped configuration 98c (see FIG. 4C).

FIG. 4E shows a cross-sectional view of a fifth lateral feed channel configuration 98e in the shaft body 20, having three lateral feed channels 90 that each connect the inner feed channel 70, such as in the form of inner central feed channel 70a, to two opposing flutes 80 on the shaft body 20. FIG. 4F shows a cross-sectional view of a sixth lateral feed channel configuration 98f in the shaft body 20, having three lateral feed channels 90 that each connect the inner feed channel 70, such as in the form of inner central feed channel 70a, to two opposing flutes 80 on the shaft body 20. The three sets of opposing flutes 80 (see FIG. 4F) connected in the sixth lateral feed channel configuration 98f (see FIG. 4F) and the three sets of opposing flutes 80 (see FIG. 4E) connected in the fifth lateral feed channel configuration 98e (see FIG. 4E) differ by one set of opposing flutes 80.

FIG. 4G shows a cross-sectional view of a seventh lateral feed channel configuration 98g in the shaft body 20, having four lateral feed channels 90 that each connect the inner feed channel 70, such as in the form of inner central feed channel 70a, to two opposing flutes 80 on the shaft body 20. The various lateral feed channel configurations 98 (see FIGS. 4A-4G) may each be used in the first set 90a (see FIGS. 1C, 2B, 3B) and/or the second set 90b (see FIGS. 1C, 2B, 3B), or additional sets of lateral feed channels 90 formed in the shaft body 20. In addition, various combinations of the lateral feed channel configurations 98 (see FIGS. 4A-4G) may be used in the first set 90a (see FIGS. 1C, 2B, 3B) and/or the second set 90b (see FIGS. 1C, 2B, 3B), or additional sets of lateral feed channels 90 formed in the shaft body 20.

For example, for a fastener 10 (see FIGS. 1A, 1B, 1C) having eight (8) flutes 80 (see FIGS. IE, 2E, and 3D), if it is desired that each of the plurality of flutes 80 (see FIGS. 1C, 2B, 3B) be intersected at least once by a lateral feed channel 90, then a combination of the third lateral feed channel cross-shaped configuration 98c (see FIG. 4C) for the first set 90a or level in the fastener 10, and the fourth lateral feed channel X-shaped configuration 98d (see FIG. 4D) for the second set 90b or level in the fastener 10, would be an optional design to use. Alternatively, other combinations of the lateral feed channel configurations 98 (see FIGS. 4A-4G) could be used.

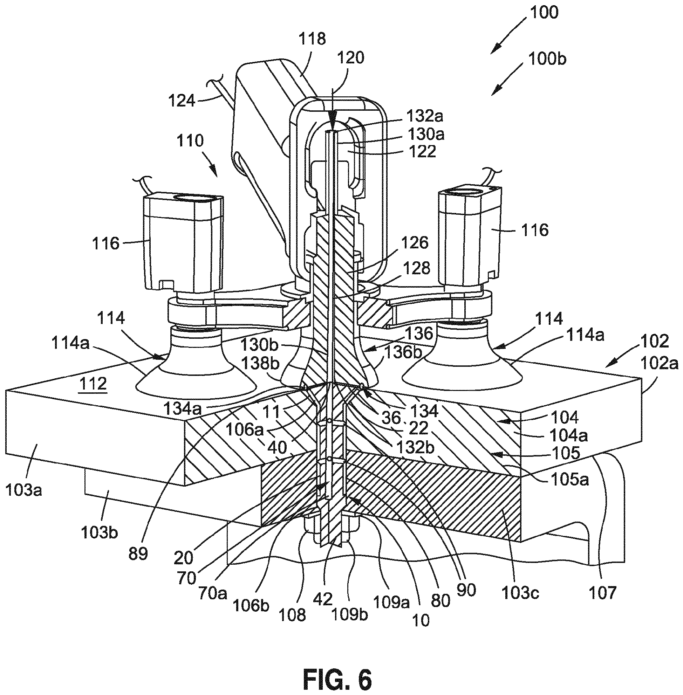

Now referring to FIGS. 5A-5B and FIG. 6, in another embodiment, there is provided a fastener system 100 (see FIGS. 5A, 6) including one or more fasteners 10 (see FIGS. 1A, 2A, 3A, 5A, 6), as discussed in detail above, installed in a composite structure 102 (see FIGS. 5A, 6), such as a carbon fiber reinforced plastic (CFRP) structure 102a (see FIGS. 5A, 6) and filled with a conductive fluid 120 (see FIGS. 5A, 6, 7A). The fastener system 100 (see FIGS. 5A, 6) provides electrical contact and electrical conductivity between the one or more fasteners 10 (see FIGS. 1A, 2A, 3A, 5A, 6) and the composite structure 102 (see FIGS. 5A, 6), such as the carbon fiber reinforced plastic (CFRP) structure 102a (see FIGS. 5A, 6), may provide improved or enhanced electrical contact and improved or enhanced electrical conductivity.

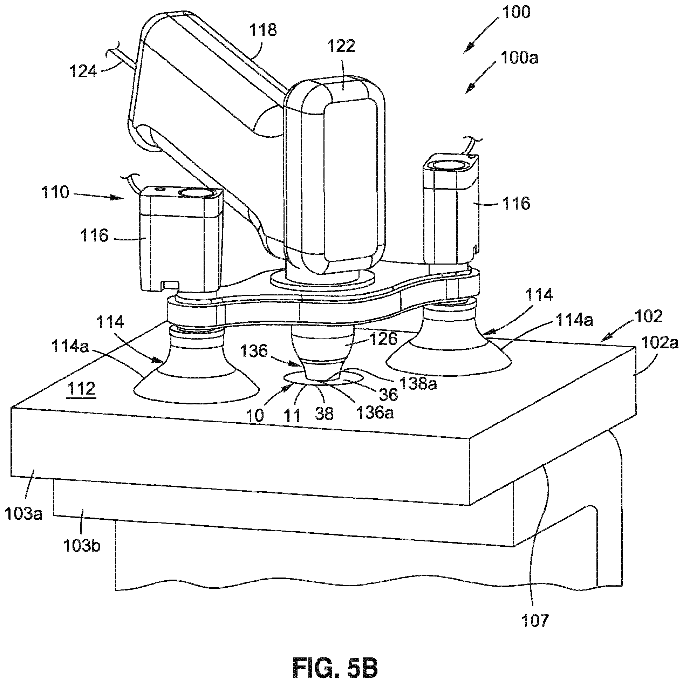

As used herein, "carbon fiber reinforced plastic (CFRP)" means a composite material made of a matrix material 104 (see FIGS. 5A, 6, 7A), such as a resin matrix 104a (see FIGS. 5A, 6, 7A) reinforced with a plurality of fibers 105 (see FIGS. 5A, 6, 7A), such as carbon fibers 105a (see FIGS. 5, 6, 7A), or a combination of carbon fibers 105a and other reinforcing fibers, such as glass fibers, aramid fibers, graphite fibers, aromatic polyamide fiber, fiberglass, aluminum fibers, or other suitable reinforcing fibers. The matrix material 104 (see FIGS. 5A, 6, 7A), such as the resin matrix 104a (see FIGS. 5A, 6, 7A) of the CFRP preferably comprises a polymer resin comprising thermoset polymer resins or thermoplastic polymer resins. Exemplary thermoset polymer resins that may be used include epoxy resins, polyester resins, phenolic resins, vinyl ester resins, allyl resins, bismaleimide (BMI) resins, polyurethane (PUR) resins, cyanate ester resins, polyimide resins, or other suitable thermoset polymer resins or resin systems. Exemplary thermoplastic polymer resins that may be used include polyethylene (PE) resins, vinyl resins, polyproplyene (PP) resins, polyamide resins including nylon resins, polycarbonate resins, polyethylene terephthalate (PET) resins, polyetheretherketone polymer (PEEK) resins, polyetherketoneketone polymer (PEKK) resins, polyethersulfone (PES) resins, polysulfone (PSU) resins, polyphenylene sulfide (PPS) resins, polytetrafluoroethylene (PTFE) resins, or other suitable thermoplastic polymer resins or resin systems. The composite structure 102 may also include one or more metallic structures 103c (see FIG. 5A), for example, made out of aluminum or another suitable metal material, and fastened or attached to the composite structure 102.

FIG. 5A is an illustration of a cutaway side perspective view of an embodiment of the fastener system 100, such as in the form of fastener system 100a, of the disclosure. FIG. 5B is an illustration of a side perspective view of the fastener system 100, such as in the form of fastener system 100a, of FIG. 5A. FIG. 6 is an illustration of a cutaway side perspective view of another embodiment of the fastener system 100, such as in the form of fastener system 100b, of the disclosure.

As shown in FIGS. 5A and 6, the fastener system 100 comprises one or more fasteners 10 configured for installation in one or more corresponding fastener holes 11 formed in the composite structure 102. FIGS. 5A-5B and 6 show the fastener 10 inserted into the composite structure 102, such as in the form of the carbon fiber reinforced plastic (CFRP) structure 102a.

As shown in FIGS. 5A-5B and 6, the composite structure 102 comprises a first part 103a and a second part 103b. As shown in FIGS. 5A and 6, the first part 103a may be constructed of composite material, including the matrix material 104, such as the resin matrix 104a, and the plurality of fibers 105, such as carbon fibers 105a. It is noted that the matrix material 104, such as the resin matrix 104a, and the plurality of fibers 105, such as the carbon fibers 105a, are only schematically represented in FIGS. 5A, 6, and 7A-B. The plurality of fibers 105 (see FIGS. 5A, 6, 7A-7B) extend through the matrix material 104 (see FIGS. 5A, 6, 7A-7B) and are positioned throughout the composite structure 102 (see FIGS. 5A, 6, 7A-7B), extending in a length direction, a width direction, or a combination of these directions, such as 0, 90,+/-45 degree orientations, and layered in a thickness direction of the composite structure 102. The second part 103b (see FIGS. 5A, 6) may comprise a metallic structure 103c (see FIGS. 5A, 6) made of a metal material, such as aluminum, or another suitable metal material, and fastened or attached to the first part 103a (see FIG. 5A) of the composite structure 102 (see FIG. 5A). Alternatively, the first part 103a (see FIG. 5A) may comprise a metallic structure made of a metal material, and the second part 103b (see FIG. 5A) may comprise a composite material.

The first part 103a (see FIGS. 5A, 6) has an interior opening 106a (see FIGS. 5A, 6) through which the fastener 10 (see FIGS. 5A, 6) is inserted, and the second part 103b (see FIGS. 5A, 6) has an interior opening 106b (see FIGS. 5A, 6) through which the fastener 10 (see FIGS. 5A, 6) is also inserted. The fastener 10 (see FIGS. 5A, 6) attaches or joins the first part 103a (see FIGS. 5A-5B, 6) to the second part 103b (see FIGS. 5A-5B, 6) to form a composite joint 107 (see FIGS. 5A-5B, 6).

Each fastener 10 (see FIGS. 5A, 6) of the fastener system 100 (see FIGS. 5A, 6) comprises, as discussed above, an elongated shaft 14 (see FIGS. 1A, 2A, 3A) having a first end 16 (see FIGS. 1A, 2A, 3A) with the head portion 22 (see FIGS. 1A, 2A, 3A, 5A, 6), a second end 18 (see FIGS. 1A, 2A, 3A) with the threaded portion 42 (see FIGS. 1A, 2A, 3A, 5A, 6), and the shaft body 20 (see FIGS. 1A, 2A, 3A, 5A, 6) disposed therebetween. Each fastener 10 (see FIGS. 5A, 6) further comprises, as discussed above, at least one inner feed channel 70, such as in the form of inner central feed channel 70a (see FIGS. 5A, 6), extending from an opening 40 (see FIGS. 5A, 6) in the head portion 22 (see FIGS. 5A, 6), through the head portion 22 (see FIGS. 5A, 6) and the shaft body 20 (see FIGS. 5A, 6), along a longitudinal central axis 78 (see FIGS. 1A, 2A, 3A) of the elongated shaft 14 (see FIGS. 1A, 2A, 3A), and terminating proximal to the threaded portion 42 (see FIGS. 5A, 6).

Each fastener 10 (see FIGS. 1A, 2A, 3A, 5A, 6) further comprises, as discussed above, a plurality of flutes 80 (see FIGS. 1A, 2A, 3A, 5A, 6) formed along and circumferentially spaced around the outer surface 64 (see FIGS. 1A, 2A, 3A) of the shaft body 20 (see FIGS. 1A, 2A, 3A, 5A, 6), and continuously formed along and circumferentially spaced around the outer surface 32 (see FIGS. 1A, 2A, 3A) of the head portion 22 (see FIGS. 1A, 2A, 3A, 5A, 6). Each flute 80 (see FIGS. 1A, 2A, 3A, 5A, 6) extends from a first location 84 (see FIGS. 1A, 2A, 3A) proximal to the threaded portion 42 (see FIGS. 1A, 2A, 3A, 5A, 6), along the outer surface 64 (see FIGS. 1A, 2A, 3A) of the shaft body 20 (see FIGS. 1A, 2A, 3A, 5A, 6), and radially outward along the outer surface 32 (see FIGS. 1A, 2A, 3A) of the head portion 22 (see FIGS. 1A, 2A, 3A, 5A, 6). Each fastener 10 (see FIGS. 1A, 2A, 3A, 5A, 6) further comprises, as discussed above, one or more lateral feed channels 90 (see FIGS. 1A, 2A, 3A, 5A, 6), or cross channels, formed laterally through the shaft body 20 (see FIGS. 1A, 2A, 3A, 5A, 6). Each lateral feed channel 90 (see FIGS. 1A, 2A, 3A, 5A, 6) connects the inner feed channel 70 (see FIGS. 1B, 1C, 2B, 2C, 3B, 5A, 6, 7A-7B), such as in the form of inner central feed channel 70a (see FIGS. 1B, 1C, 2B, 2C, 3B, 5A, 6, 7A-7B), to at least two opposing flutes 80 (see FIGS. 1A, 2A, 3A, 5A, 6) on the outer surface 64 (see FIGS. 1A, 2A, 3A) of the shaft body 20 (see FIGS. 1A, 2A, 3A, 5A, 6).

As further shown in FIGS. 5A and 6, the fastener 10 may be tightened into place within the composite structure 102 with a threaded collar 108 threaded around the threaded portion 42 of the fastener 10 and adjacent the composite structure 102, such as the second part 103b of the composite structure 102. As shown in FIG. 5A, the threaded collar 108 has a first end 109a that is disposed against the second part 103b of the composite structure 102, and has a second end 109b.

As shown in FIGS. 5A-5B and 6, the fastener system 100 further comprises an injection tool assembly 110 configured for coupling to each of the one or more fasteners 10 installed in the one or more corresponding fastener holes 11. As shown in FIGS. 5A-5B and 6, the injection tool assembly 110 is coupled to the top surface 36 of the head portion 22 (see FIG. 5A) of the fastener 10 and is also coupled to a top surface 112 of the first part 103a of the composite structure 102. The injection tool assembly 110 (see FIGS. 5A-5B, 6) comprises one or more attachment elements 114 (see FIGS. 5A-5B, 6), such as in the form of suction cups 114a (see FIGS. 5A-5B, 6) for attachment to the top surface 112 (see FIGS. 5A-5B, 6). As shown in FIGS. 5A-5B and 6, the injection tool assembly 110 comprises two attachment elements 114, such as in the form of two suction cups 114a. Each attachment element 114 (see FIGS. 5A-5B, 6) may be coupled to a vacuum connection portion 116 (see FIGS. 5A-5B, 6) for providing air for vacuum suction by the attachment elements 114 (see FIGS. 5A-5B, 6), such as in the form of suction cups 114a (see FIGS. 5A-5B, 6).

The fastener system 100 (see FIGS. 5A, 6) further comprises the conductive fluid 120 (see FIGS. 5A, 6, 7A) injected via the injection tool assembly 110 (see FIGS. 5A, 6) into each fastener 10 (see FIGS. 5A, 6) installed in the composite structure 102 (see FIGS. 5A, 6). As further shown in FIGS. 5A-5B and 6, the injection tool assembly 110 comprises a vacuum and injection control handle 118 coupled to a vessel 122 that preferably contains the conductive fluid 120 (see FIGS. 5A, 6, 7A) for injection into the inner feed channel 70 (see FIGS. 5A, 6), such as in the form of inner central feed channel 70a (see FIGS. 5A, 6), of the fastener 10 (see FIGS. 5A, 6). The vessel 122 (see FIGS. 5A, 6) is configured for coupling to the fastener 10 (see FIGS. 5A, 6).

The conductive fluid 120 (see FIGS. 5A, 6, 7A) is preferably in the form of a fluid, such as a liquid, having a low viscosity, i.e., a thin liquid that moves quickly with low or little resistance. The low viscosity of the conductive fluid 120 (see FIGS. 5A, 6, 7A) facilitates flow of the conductive fluid 120 (see FIGS. 5A, 6, 7A) through the inner feed channel 70 (see FIGS. 1B, 2B, 3B), such as in the form of inner central feed channel 70a (see FIGS. 1B, 2B, 3B), and through the one or more lateral feed channels 90 (see FIGS. 1B, 2B, 3B) of the fastener 10 (see FIGS. 1B, 2B, 3B).

The conductive fluid 120 (see FIGS. 5A, 6, 7A) preferably comprises a resin material 121 (see FIG. 7A), such as a binding resin material or resin system, mixed with, filled with, or containing a conductive material 123 (see FIG. 7A), such as a conductive additive or filler, that is electrically conductive. The resin material 121 (see FIG. 7A) may comprise a polymer resin comprising thermoset polymer resins or thermoplastic polymer resins. Exemplary thermoset polymer resins that may be used include epoxy resins, polyester resins, phenolic resins, vinyl ester resins, allyl resins, bismaleimide (BMI) resins, polyurethane (PUR) resins, cyanate ester resins, polyimide resins, or other suitable thermoset polymer resins or resin systems. Exemplary thermoplastic polymer resins that may be used include polyethylene (PE) resins, vinyl resins, polyproplyene (PP) resins, polyamide resins including nylon resins, polycarbonate resins, polyethylene terephthalate (PET) resins, polyetheretherketone polymer (PEEK) resins, polyetherketoneketone polymer (PEKK) resins, polyethersulfone (PES) resins, polysulfone (PSU) resins, polyphenylene sulfide (PPS) resins, polytetrafluoroethylene (PTFE) resins, or other suitable thermoplastic polymer resins or resin systems. Exemplary resin materials 121 (see FIG. 7A), or binding resin materials or resin systems, for the conductive fluid 120 (see FIGS. 5A, 6, 7A) comprise epoxy resins, bismaleimide (BMI) resins, phenolic resins, and cyanate ester resins.

The conductive material 123 (see FIG. 7A) may comprise, for example, chopped carbon fibers; carbon nanotubes; carbon nanofibers; carbon black; metallic fibers; metallic particles including silver particles, nickel particles, copper particles, and aluminum particles; graphite; graphene; graphene nanofillers; or other suitable conductive materials. Additionally, the conductive material 123 (see FIG. 7A) may comprise conductive polymers, such as poly(3,4-ethylenedioxythiophene) polystyrene sulfonate (PEDOT/PSS), polyaniline, polypyrrole, polyacetylene, polythiophene, or other suitable conductive polymers. As used herein, "conductive polymer", also referred to as "intrinsically conducting polymer", means an organic polymer capable of conducting electricity. Exemplary conductive materials 123 (see FIG. 7A) for the conductive fluid 120 (see FIGS. 5A, 6, 7A) comprise carbon nanotubes, chopped carbon fibers, silver particles, and the conductive polymer poly(3,4-ethylenedioxythiophene) polystyrene sulfonate (PEDOT/PSS).

Exemplary conductive fluids 120 (see FIGS. 5A, 6, 7A) comprise an epoxy resin doped with silver particles; a bismaleimide (BMI) resin doped with silver particles; a phenolic resin doped with silver particles; a cyanate ester resin doped with silver particles; an epoxy resin doped with carbon nanotubes; a bismaleimide (BMI) resin doped with carbon nanotubes; a phenolic resin doped with carbon nanotubes; a cyanate ester resin doped with carbon nanotubes; an epoxy resin with chopped carbon fibers; a bismaleimide (BMI) resin with chopped carbon fibers; a phenolic resin with chopped carbon fibers; a cyanate ester resin with chopped carbon fibers; and a resin with poly(3,4-ethylenedioxythiophene) polystyrene sulfonate (PEDOT/PSS). As used herein, "doped" means mixed with, filled with, or containing, i.e., the resin is mixed with, filled with, or contains conductive material or additives, such as silver particles, carbon nanotubes, or chopped carbon fibers, to provide conductivity, such as electrical conductivity.

Preferably, the resin material 121 (see FIG. 7A), or resin system, of the conductive fluid 120 (see FIGS. 5A, 6, 7A) has similar chemical properties, structural properties, and expansion characteristics as the matrix material 104 (see FIGS. 5A, 6, 7A), such as the resin matrix 104a (see FIGS. 5A, 6, 7A) of the composite structure 102 (see FIGS. 5A, 6), such as the carbon fiber reinforced plastic (CFRP) structure 102a (see FIGS. 5A, 6).

Preferably, the conductive fluid 120 (see FIGS. 5A, 6, 7A) has a conductivity, such as an electrical conductivity, of approximately 1 x 10⁴ S/m (siemens per meter) or greater. As used herein, "conductivity" and "electrical conductivity" mean the conductive fluid's or conductive material's ability to conduct an electric current. Preferably, the conductivity, such as the electrical conductivity, of the conductive fluid 120 (see FIGS. 5A, 6, 7A) approaches the conductivity, such as the electrical conductivity, of the composite material of the composite structure 102 (see FIGS. 5A, 6, 7A), along the direction of the carbon fibers 105a (see FIG. 7A) of the composite material comprising the composite structure 102 (see FIG. 7A).

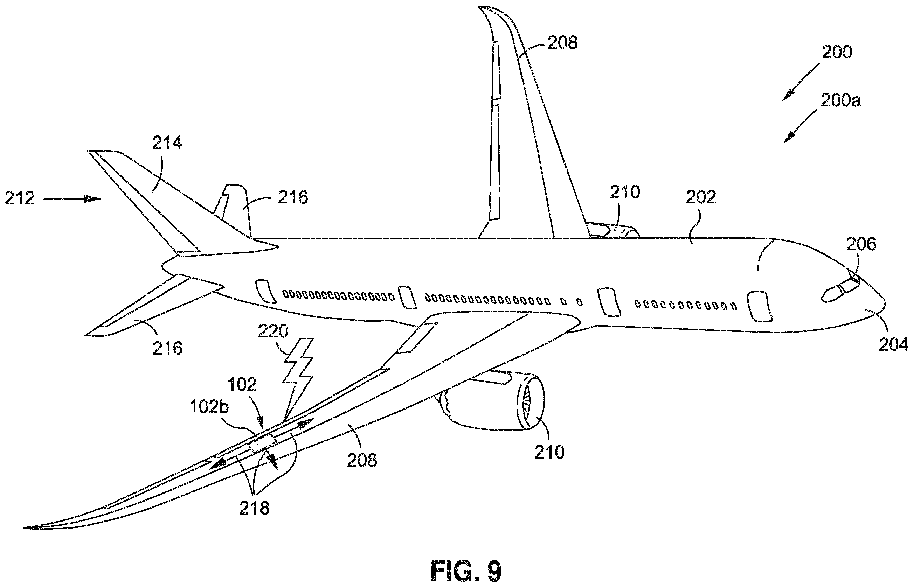

Preferably, the conductive fluid 120 (see FIGS. 5A, 6, 7A) is selected so that a coefficient of thermal expansion (CTE) of the conductive fluid 120 (see FIGS. 5A, 6, 7A) substantially matches or matches a coefficient of thermal expansion (CTE) of the composite structure 102 (see FIGS. 5A, 6, 7A), such as the CTE of the carbon fiber reinforced plastic (CFRP) structure 102a (see FIGS. 5A, 6, 7A), in contact with the conductive fluid 120 (see FIGS. 5A, 6, 7A). As used herein, the "coefficient of thermal expansion (CTE)" means a change in length or volume (e.g., linear thermal expansion in inches) of a material for a unit change in temperature (e.g., per degree Fahrenheit or Celsius), and is used to determine the rate at which a material expands as a function of temperature, and may be used to determine if thermal stress issues may occur. Polymeric plastics tend to expand and contract anywhere from six (6) to nine (9) times more than metals, and differences in CTE between adjacent materials may lead to internal stresses and stress concentrations in the polymer, which may cause premature micro-cracking to occur. Thus, the conductive fluid 120 (see FIGS. 5A, 6, 7A) is preferably selected so that the CTE of the conductive fluid 120 (see FIGS. 5A, 6, 7A) substantially matches or matches the CTE of the composite structure 102 (see FIGS. 5A, 6, 7A), such as the carbon fiber reinforced plastic (CFRP) structure 102a (see FIGS. 5A, 6, 7A), so that internal stress is not generated in the typical ground to altitude temperature variations that are typically experienced in aircraft 200a (see FIG. 9) and that could lead to micro-cracks in fastened composite joints.

As shown in FIGS. 5A and 6, the injection tool assembly 110 further comprises a pressure injector 126 coupled to the vessel 122 and configured to couple to the opening 40 in the head portion 22 of the fastener 10. The pressure injector 126 (see FIGS. 5A, 6) is preferably configured to inject the conductive fluid 120 (see FIGS. 5A, 6), under pressure, into the fastener 10 (see FIGS. 5A, 6).

As shown in FIGS. 5A-5B and 6, the vessel 122 is coupled to the pressure injector 126, which is coupled to a pressurized conductive fluid connection 124 to provide pressure and power for injection of the conductive fluid 120 into the fastener 10. As shown in FIGS. 5A and 6, the pressure injector 126 preferably comprises a hollow injection tube 128 having a first end 130a with a first end opening 132a configured for injection of the conductive fluid 120 into the hollow injection tube 128, and having a second end 130b with a second end opening 132b configured for alignment with and coupling to the opening 40 in the head portion 22 of the fastener 10 and configured for injection of the conductive fluid 120, under pressure, into the opening 40 of the fastener 10.

In one embodiment, as shown in FIG. 5A, the injection tool assembly 110, such as in the form of injection tool assembly 110a, injects or pumps the conductive fluid 120 into the inner feed channel 70, such as in the form of inner central feed channel 70a, of the fastener 10. In another embodiment, as shown in FIG. 6, the injection tool assembly 110, such as in the form of injection tool assembly 110b, injects or pumps the conductive fluid 120 into both the inner feed channel 70, such as in the form of inner central feed channel 70a, and the radial feed channels 89 formed by the periphery openings 86b (see FIG. 3A) at the outer periphery 38 (see FIG. 3A) of the head portion 22 and the flutes 80 of the fastener 10.

As further shown in FIGS. 5A and 6, the pressure injector 126 may have one or more seal elements 134, such as in the form of O-ring pressure seals 134a, attached at an injection end portion 136 of the pressure injector 126. The seal elements 134 (see FIGS. 5A, 6), such as in the form of O-ring pressure seals 134a (see FIGS. 5A, 6), preferably pressure seal the injection end portion 136 (see FIGS. 5A, 6) of the pressure injector 126 (see FIGS. 5A, 6) against the top surface 36 (see FIGS. 5A, 6) of the head portion 22 (see FIGS. 5A, 6) of the fastener 10 (see FIGS. 5A, 6).

In one embodiment, as shown in FIGS. 5A-5B, the injection end portion 136 comprises a small diameter injection end portion 136a configured to cover the opening 40 (see FIG. 5A) to the inner feed channel 70 (see FIG. 5A), such as in the form of inner central feed channel 70a (see FIG. 5A), of the fastener 10 (see FIG. 5A). The small diameter injection end portion 136a (see FIGS. 5A-5B) preferably has a diameter that is less than, or smaller than, a diameter of the top surface 36 (see FIGS. 5A-5B) of the head portion 22 (see FIG. 5A) of the fastener 10 (see FIG. 5A). The small diameter injection end portion 136a (see FIGS. 5A-5B) preferably has an outer periphery 138a that is less than or smaller than the outer periphery 38 (see FIGS. 5A-5B) of the top surface 36 (see FIGS. 5A-5B) of the head portion 22 (see FIG. 5A). As shown in FIG. 5A, the small diameter injection end portion 136a of the pressure injector 126 of the injection tool assembly 110 covers only the opening 40 and a small portion surrounding the opening 40 on the top surface 36 (see FIGS. 3C, 5A) of the head portion 22 of the fastener 10. As shown in FIGS. 5A-5B, the small diameter injection end portion 136a and does not cover the entire area of the top surface 36 (see FIGS. 3C, 5A) of the fastener 10.

In another embodiment, as shown in FIG. 6, the injection end portion 136 comprises a large diameter injection end portion 136b configured to cover the opening 40 to the inner feed channel 70, such as in the form of inner central feed channel 70a, and configured to cover the radial feed channels 89 comprising the periphery openings 86b (see FIG. 3A) to the flutes 80 (see FIGS. 3A, 6). The large diameter injection end portion 136b (see FIG. 6) preferably has a diameter that is larger, or greater than, a diameter of the top surface 36 (see FIGS. 3C, 6) of the head portion 22 (see FIG. 6) of the fastener 10 (see FIG. 6). The large diameter injection end portion 136b (see FIG. 6) preferably has an outer periphery 138b that is greater than or larger than the outer periphery 38 (see FIGS. 3C, 5B) of the top surface 36 (see FIGS. 3C, 5B, 6) of the head portion 22 (see FIG. 6). As shown in FIG. 6, the large diameter injection end portion 136b of the pressure injector 126 of the injection tool assembly 110 covers the entire area of the top surface 36 (see also FIGS. 3C, 5B) of the head portion 22 of the fastener 10.

Now referring to FIG. 7A, FIG. 7A is a schematic diagram of a partial sectional view of the fastener 10 to further illustrate the fastener system 100, such as the fastener system 100a, of FIG. 5A of the disclosure. FIG. 7A shows the fastener 10 installed in a composite structure 102, such as a carbon fiber reinforced plastic (CFRP) structure 102a, having a corresponding fastener hole 11 with a rough surface, and shows the conductive fluid 120 injected into the fastener 10 to fill the area 144 between the fastener 10 and inner surface 142 of the corresponding fastener hole 11 of the composite structure 102, to provide sufficient electrical conductivity across this fastener-to-composite structure interface.

Before the fastener 10 (see FIG. 7A) is installed in the corresponding fastener hole 11 (see FIG. 7A), the corresponding fastener hole 11 (see FIG. 7A), such as in the form of a discrete through-hole, is preferably formed, such as by drilling or another suitable forming process, into the composite structure 102 (see FIG. 7A) with a known forming device, such as a drill or other suitable hole forming device. With the formation of the corresponding fastener hole 11 (see FIG. 7A) through the composite structure 102 (see FIG. 7A), the corresponding fastener hole 11 (see FIG. 7A) engages some of the total of the plurality of fibers 105, such as the carbon fibers 105a, which are positioned throughout the composite structure 102 (see FIG. 7A), and may produce exposed tips 105b (see FIG. 7A) of the carbon fibers 105a (see FIG. 7A) at an inner surface 142 (see FIG. 7A), which may be rough, of the corresponding fastener hole 11 (see FIG. 7A) of the composite structure 102 (see FIG. 7A). In FIG. 7A, some of the exposed tips 105b (see FIG. 7A) of the carbon fibers 105a (see FIG. 7A) are schematically shown positioned at and along the inner surface 142 (see FIG. 7A) of the corresponding fastener hole 11 (see FIG. 7A).

Before the fastener 10 (see FIG. 7A) is installed in the corresponding fastener hole 11 (see FIG. 7A), which has been formed, the corresponding fastener hole 11 (see FIG. 7A) may be cleaned or prepared, if needed or desired, with a suitable cleaning or preparation device, cleaning or preparation agent, and/or cleaning or preparation method known in the art.

Once the corresponding fastener hole 11 (see FIG. 7A) has been sufficiently cleaned or prepared, the fastener 10 (see FIG. 7A) is inserted or installed into the corresponding fastener hole 11 (see FIG. 7A). The fastener 10 (see FIG. 7A) is preferably torqued or turned to fit in place in the corresponding fastener hole 11 (see FIG. 7A).

As shown in FIG. 7A, a threaded collar 108 may preferably be coupled to the threaded portion 42 of the fastener 10 to help hold the fastener 10 in place within the corresponding fastener hole 11 in the composite structure 102. As further shown in FIG. 7A, the threaded collar 108 has a first end 109a adjacent the lower end of the composite structure 102 and has a second end 109b.

After the threaded collar 108 (see FIG. 7A) is coupled or attached to the fastener 10 (see FIG. 7A), and the fastener 10 (see FIG. 7A) is secured in place in the corresponding fastener hole 11 (see FIG. 7A), the conductive fluid 120 (see FIG. 7A) is preferably injected or deposited into the fastener 10 (see FIG. 7A) with the injection tool assembly 110 (see FIG. 7A).

As shown in FIG. 7A, the fastener system 100, such as in the form of fastener system 100a, comprises the injection tool assembly 110 having a pressure injector 126 coupled to a vessel 122 containing the conductive fluid 120. As discussed above, the conductive fluid 120 (see FIG. 7A) comprises a resin material 121 (see FIG. 7A) mixed with, containing, or filled with a conductive material 123 (see FIG. 7A) that is electrically conductive.

The injection tool assembly 110 (see FIG. 7A) may be provided with pressure and power by the pressurized conductive fluid connection 124, as shown in FIG. 5A, or another suitable power and pressure source or device. The pressure injector 126 (see FIG. 7A) and the vessel 122 (see FIG. 7A) may comprise similar components and a similar construction to the pressure injector 126 (see FIG. 5A) and the vessel 122 (see FIG. 5A) shown in FIG. 5A, or may comprise other suitable known pressure injector and vessel components used in known fluid pressure injection processes.

FIG. 7A shows arrows indicating one or more flow paths 140 of the conductive fluid 120 into the fastener 10. The flow path 140 (see FIG. 7A) of the conductive fluid 120 (see FIG. 7A) into the fastener 10 (see FIG. 7A) is first started by injection or insertion of the conductive fluid 120 (see FIG. 7A) through the opening 40 (see FIG. 7A) of the head portion 22 (see FIG. 7A) at the top of the fastener 10 (see FIG. 7A), and proceeds to flow down into and through the inner feed channel 70 (see FIG. 7A), such as in the form of inner central feed channel 70a (see FIG. 7A). As shown in FIG. 7A, the flow paths 140 of the conductive fluid 120 then either continue down the inner feed channel 70, such as in the form of inner central feed channel 70a, or diverge to the right and left sides through the lateral feed channels 90, and out to the opposing flutes 80 on the outer surface 64 of the shaft body 20 and extending along the outer surface 32 of the head portion 22.

As shown in FIG. 7A, the conductive fluid 120 is transported and deposited via the at least one inner feed channel 70, such as in the form of inner central feed channel 70a, the one or more lateral feed channels 90, and the plurality of flutes 80 of the fastener 10, to one or more areas 144, or gaps, between the outer surface 64 of the fastener 10 and the inner surface 142 of the corresponding fastener hole 11 of the composite structure 102. When the conductive fluid 120 (see FIG. 7A) flows to and is deposited in the areas 144, or gaps, the conductive fluid 120 (see FIG. 7A) conforms to the shape of the areas 144, or gaps, and functions as a conforming conductive fluid 120a (see FIG. 7A). As shown in FIG. 7A, when the conductive fluid 120 is injected into the fastener 10 and the areas 144, the fastener 10 has a conformal clearance fit 146 within the composite structure 102.

The conductive fluid 120 (see FIGS. 5A, 6, 7A) preferably flows around the exposed tips 105b (see FIG. 7A) of the carbon fibers 105a (see FIG. 7A) of the composite material in the corresponding fastener hole 11 (see FIG. 7A) of the composite structure 102 (see FIG. 7A), to provide sufficient electrical connection with the composite structure 102 (see FIG. 7A) without crushing, breaking, or damaging the exposed tips 105b (see FIG. 7A) of the carbon fibers 105a (see FIG. 7A).

Once a sufficient amount of the conductive fluid 120 (see FIG. 7A) is injected or inserted into the fastener 10 (see FIG. 7A) and into the areas 144 (see FIG. 7A), or gaps, around the shaft body 20 (see FIG. 7A) and the head portion 22 (see FIG. 7A) of the fastener 10, the fastener 10 (see FIG. 7A) with the injected conductive fluid 120 (see FIG. 7A) is preferably cured. The curing may be performed using a known curing process, such as an autoclave curing process, a vacuum bag curing process, a combination autoclave and vacuum bagging curing process, a compression mold curing process, a resin transfer molding process, a room temperature curing process, or another suitable curing process. The curing may take place at an elevated, effective temperature or effective heat and/or effective pressure for an effective period of time, as required per material specifications to effectively cure a chosen conductive fluid 120 (see FIGS. 5A, 6, 7A). During curing, the conductive fluid 120 (see FIGS. 5A, 6, 7A) hardens, where deposited, in and around the fastener 10 (see FIGS. 5A, 6, 7A). The curing temperature or heat and/or pressure needed depends on the type of conductive fluid 120 (see FIG. 7A) chosen to be injected into the fastener 10 (see FIG. 7A), and may thus vary. As used herein, "curing" means undergoing a full or partial hardening process, with or without heat, and includes precuring or precured resins.

The fastener 10 (see FIGS. 1A, 2A, 3A) comprises a conformal clearance fit fastener 12 (see FIGS. 1A, 2A, 3A), that when used with the conductive fluid 120 (see FIGS. 5A, 6, 7A), provides electrical conductivity and good electrical contact with composite joints 107 (see FIGS. 5A, 6) of the composite structure 102 (see FIGS. 5A, 6, 7A), such as aircraft composite structures 102b (see FIG. 9) of the aircraft 200a (see FIG. 9). The conductive fluid 120 (see FIG. 7A) preferably provides electrical contact, and may provide improved or enhanced electrical contact between carbon fibers 105a (see FIG. 7A) of the composite structure 102 (see FIG. 7A) and the fastener 10 (see FIG. 7A) installed in the corresponding fastener hole 11 (see FIG. 7A) of the composite structure 102 (see FIG. 7A). This preferably results in the fastener system 100 (see FIG. 7A) providing electrical contact with the composite structure 102 (see FIG. 7A), and, in turn, preferably provides electrical conductivity, and may provide improved electrical conductivity, and dissipation of current energy 218 (see FIG. 9), which can result from or can be caused by lightning strikes 220 (see FIG. 9) to an aircraft 200a (see FIG. 9) having the composite structure 102 (see FIGS. 7A, 9), such as an aircraft composite structure 102b (see FIG. 9).

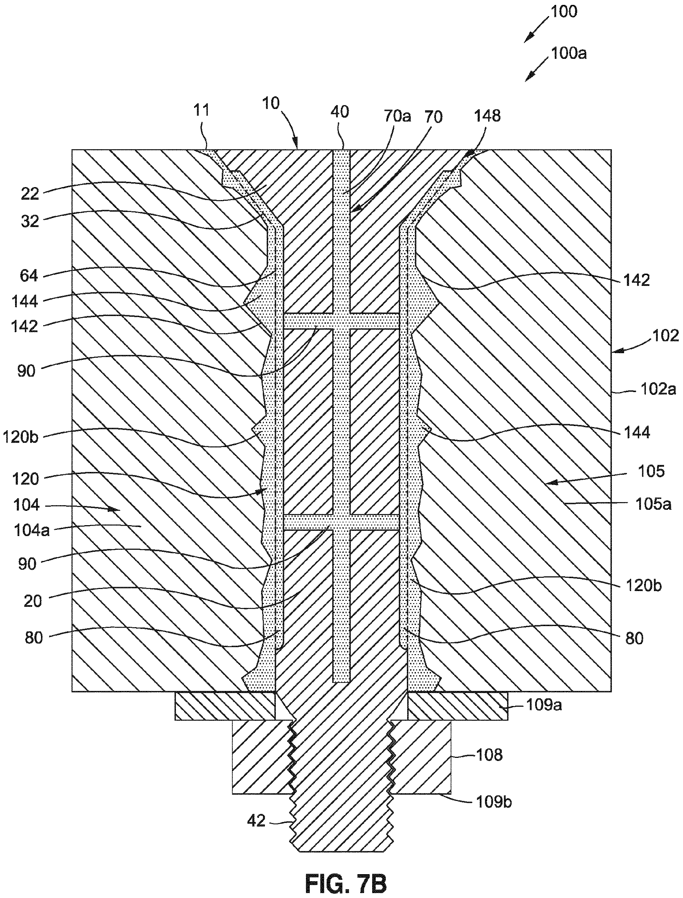

Now referring to FIG. 7B, FIG. 7B is a schematic diagram of a partial sectional view of the fastener system 100, such as in the form of fastener system 100a, of FIG. 7A. FIG. 7B shows the fastener 10 installed in the composite structure 102, such as the carbon fiber reinforced plastic (CFRP) structure 102a, after injection of the conductive fluid 120 into the fastener 10 and into the areas 144, and after cure. FIG. 7B shows the threaded portion 42 of the fastener 10 with the attached threaded collar 108 having the first end 109a adjacent the lower end of the composite structure 102 and having the second end 109b.

As shown in FIG. 7B, the conductive fluid 120 comprises a cured conforming conductive fluid 120b filling the areas 144, or gaps, between the outer surface 64 of the shaft body 20 and the inner surface 142 of the corresponding fastener hole 11, and between the outer surface 32 of the head portion 22 and the inner surface 142 of the corresponding fastener hole 11, and filling the inner feed channel 70, such as in the form of inner central feed channel 70a, the lateral feed channels 90, and the plurality of flutes 80. As shown in FIG. 7B, after conductive fluid 120 injection and cure, the fastener 10 preferably has or approaches an effective interference fit 148 within the composite structure 102. The opening 40 (see FIG. 7B) of the fastener 10 (see FIG. 7B) may be plugged, sealed, or closed with a known plug element (not shown) or other suitable sealing element or device after injection of the conductive fluid 120 (see FIG. 7B), and either prior to, or after, cure.

The net electrical effect of the fastener system 100 (see FIGS. 5A, 6, 7A) is the equivalent of a conformal clearance fit 146 (see FIG. 7A) that preferably meets or exceeds an effective interference fit 148 (see FIG. 7B) of an interference fit fastener at a reduced cost. Preferably, the one or more fasteners 10 (see FIGS. 1A, 2A, 3A) each comprise a conformal clearance fit fastener 12 (see FIGS. 1A, 2A, 3A) that is sleeveless, and that when used with the conductive fluid 120 (see FIGS. 5A, 6, 7A), provides or approaches an effective interference fit 148 (see FIG. 7B) with equal or greater electrical conductivity. The conductive fluid 120 (see FIG. 7A) that is pumped or injected into the areas 144 (see FIG. 7A), or gaps, creates the conformal clearance fit 146 (see FIG. 7A) that provides or approaches the effective interference fit 148 (see FIG. 7B), without crushing, breaking, or damaging the exposed tips 105b (see FIG. 7A) of the carbon fibers 105a (see FIG. 7A) in the corresponding fastener hole 11 (see FIG. 7A) of the composite structure 102 (see FIG. 7A).

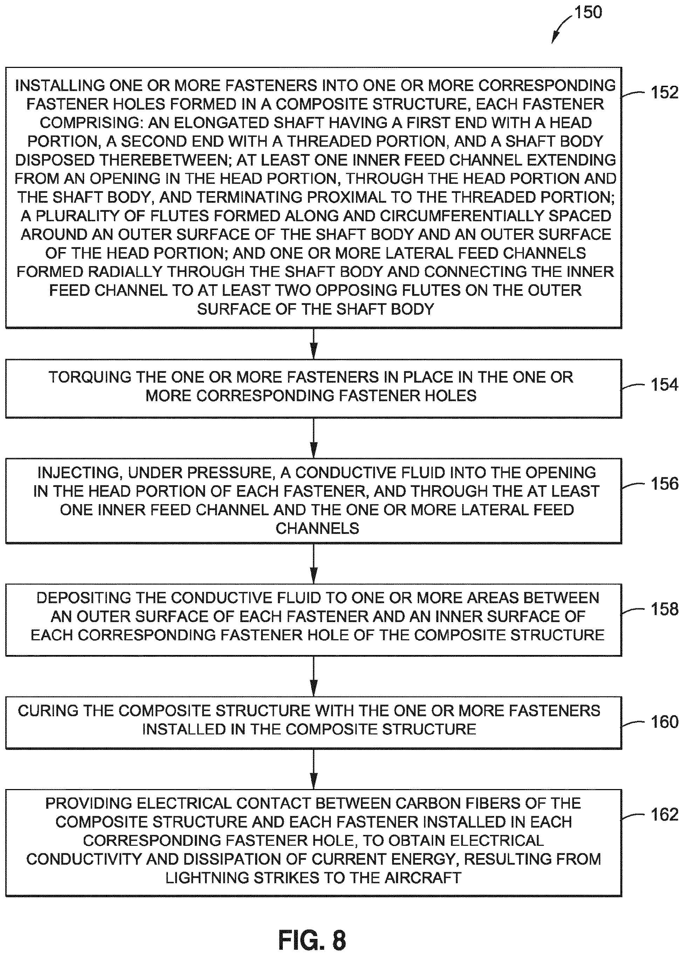

Now referring to FIG. 8, in another embodiment there is provided a method 150 for providing to a composite structure 102 (see FIGS. 5A, 6, 7A-7B, 9) of an aircraft 200a (see FIG. 9) improved electrical conductivity and dissipation of current energy 218 (see FIG. 9) resulting from lightning strikes 220 (see FIG. 9) to the aircraft 200a (see FIG. 9). FIG. 8 is a flow diagram showing an exemplary embodiment of the method 150 of the disclosure.

As shown in FIG. 8, the method 150 comprises step 152 of installing one or more fasteners 10 (see FIGS. 1A, 2A, 3A, 5A, 6, 7A-7B) into one or more corresponding fastener holes 11 (see FIGS. 5A, 6, 7A) formed in the composite structure 102 (see FIGS. 5A, 6, 7A, 9).

As discussed in detail above, each fastener 10 (see FIGS. 1A, 2A, 3A) comprises, as discussed above, an elongated shaft 14 (see FIGS. 1A, 2A, 3A) having a first end 16 (see FIGS. 1A, 2A, 3A) with a head portion 22 (see FIGS. 1A, 2A, 3A), a second end 18 (see FIGS. 1A, 2A, 3A) with a threaded portion 42 (see FIGS. 1A, 2A, 3A), and a shaft body 20 (see FIGS. 1A, 2A, 3A) disposed therebetween.

In one embodiment, the step 152 (see FIG. 8) of installing the one or more fasteners 10 (see FIGS. 1A, 3A) may comprise installing the one or more fasteners 10 (see FIGS. 1A, 3A), each with the shaft body 20 (see FIGS. 1A, 3A) having a substantially straight outer profile 66a (see FIGS. 1A, 3A). In another embodiment, the step 152 (see FIG. 8) of installing the one or more fasteners 10 (see FIG. 2A) may comprise installing the one or more fasteners 10 (see FIG. 2A), each with the shaft body 20 (see FIG. 2B) having a tapered outer profile 66b (see FIG. 2B).

Each fastener 10 (see FIGS. 1A, 2A, 3A) further comprises, as discussed above, at least one inner feed channel 70 (see FIG. 1B, 2B, 3B, such as in the form of inner central feed channel 70a (see FIGS. 1B, 2B, 3B), having a first end 72 (see FIGS. 1B, 2B, 3B) and a second end 74 (see FIGS. 1B, 2B, 3B). The inner feed channel 70 (see FIGS. 1B, 2B, 3B), such as in the form of inner central feed channel 70a (see FIGS. 1B, 2B, 3B), extends at the first end 72 (see FIGS. 1B, 2B, 3B) from the opening 40 (see FIGS. 1B, 2B, 3B) in the head portion 22 (see FIGS. 1B, 2B, 3B), through the head portion 22 and the shaft body 20 (see FIGS. 1B, 2B, 3B), along the longitudinal central axis 78 (see FIGS. 1B, 2B, 3B) of the elongated shaft 14 (see FIGS. 1B, 2B, 3B), and terminates at the second end 74 (see FIGS. 1B, 2B, 3B) at the location 76 (see FIGS. 1B, 2B, 3B) proximal to or near the threaded portion 42 (see FIGS. 1B, 2B, 3B).

Each fastener 10 (see FIGS. 1A, 2A, 3A) further comprises, as discussed above, a plurality of flutes 80 (see FIGS. 1A, 2A, 3A) formed along and circumferentially spaced around the outer surface 64 (see FIGS. 1A, 2A, 3A) of the shaft body 20 (see FIGS. 1A, 2A, 3A) and formed along and circumferentially spaced around the outer surface 32 (see FIGS. 1A, 2A, 3A) of the head portion 22 (see FIGS. 1A, 2A, 3A). As further shown in FIGS. 1A, 2A, 3A, each flute 80 has the first end 82 extending from a first location 84 proximal to the threaded portion 42, along the outer surface 64 of the shaft body 20, and radially outward along the outer surface 32 of the head portion 22.

Each fastener 10 (see FIGS. 1B, 2B, 3B) further comprises, as discussed above, one or more lateral feed channels 90 (see FIGS. 1B, 2B, 3B), or cross channels, formed laterally through the shaft body 20 (see FIGS. 1B, 2B, 3B). Each lateral feed channel 90 (see FIGS. 1B, 2B, 3B) connects the inner feed channel 70 (see FIGS. 1B, 2B, 3B), such as in the form of inner central feed channel 70a (see FIGS. 1B, 2B, 3B), to at least two opposing flutes 80, such as flutes 80a, 80b (see FIGS. 1B, 2B, 3B), on the outer surface 64 (see FIGS. 1B, 2B, 3B) of the shaft body 20 (see FIGS. 1B, 2B, 3B).

As shown in FIG. 8, the method 150 further comprises step 154 of torquing the one or more fasteners 10 (see FIGS. 1A, 2A, 3A, 5A, 6, 7A) in place in the one or more corresponding fastener holes 11 (see FIGS. 5A, 6, 7A). A threaded collar 108 (see FIG. 7A) may preferably be coupled to the threaded portion 42 (see FIG. 7A) of the fastener 10 (see FIG. 7A) to help hold the fastener 10 (see FIG. 7A) in place within the corresponding fastener hole 11 (see FIG. 7A) in the composite structure 102 (see FIG. 7A).

As shown in FIG. 8, the method 150 further comprises step 156 of injecting, under pressure, a conductive fluid 120 (see FIGS. 5A, 6A, 7A) into the opening 40 (see FIG. 7A) in the head portion 22 (see FIG. 7A) of the fastener 10 (see FIG. 7A), and through the at least one inner feed channel 70 (see FIG. 7A), such as in the form of inner central feed channel 70a (see FIG. 7A), and through the one or more lateral feed channels 90 (see FIG. 7A) out to the plurality of flutes 80 (see FIG. 7A).

The step 156 (see FIG. 8) of injecting, under pressure, the conductive fluid 120 (see FIGS. 5A, 6) preferably comprises using an injection tool assembly 110 (see FIGS. 5A, 6) to inject the conductive fluid 120 (see FIGS. 5A, 6) into the fastener 10 (see FIGS. 5A, 6). As shown in FIGS. 5A and 6, the injection tool assembly 110 comprises a vessel 122 containing the conductive fluid 120. The vessel 122 (see FIGS. 5A, 6) is preferably configured for coupling to the fastener 10 (see FIGS. 1A, 2A, 3A, 5A, 6). As shown in FIGS. 5A, 6, the injection tool assembly 110 further comprises a pressure injector 126 coupled to the vessel 122, and the pressure injector 126 is preferably configured to couple to the opening 40 in the head portion 22 of the fastener 10. The vessel 122 (see FIG. 7A) may also be configured to couple to the opening 40 (see FIG. 7A). The pressure injector 126 (see FIGS. 5A, 6, 7A) is preferably configured to inject the conductive fluid 120 (see FIGS. 5A, 6, 7A), under pressure, into the fastener 10 (see FIGS. 5A, 6, 7A).

The step 156 (see FIG. 8) of injecting, under pressure, the conductive fluid 120 (see FIGS. 5A, 6, 7A), further comprises injecting the conductive fluid 120 (see FIGS. 5A, 6, 7A) comprising a resin material 121 (see FIG. 7A) mixed with a conductive material 123 (see FIG. 7A) that is electrically conductive. As discussed above, exemplary resin materials 121 (see FIG. 7A), or binding resin materials or resin systems, for the conductive fluid 120 (see FIGS. 5A, 6, 7A) comprise epoxy resins, bismaleimide (BMI) resins, phenolic resins, and cyanate ester resins, and exemplary conductive materials 123 (see FIG. 7A) for the conductive fluid 120 (see FIGS. 5A, 6, 7A) comprise carbon nanotubes, chopped carbon fibers, silver particles, and the conductive polymer poly(3,4-ethylenedioxythiophene) polystyrene sulfonate (PEDOT/PSS). Exemplary conductive fluids 120 (see FIGS. 5A, 6, 7A) comprise an epoxy resin doped with silver particles; a bismaleimide (BMI) resin doped with silver particles; a phenolic resin doped with silver particles; a cyanate ester resin doped with silver particles; an epoxy resin doped with carbon nanotubes; a bismaleimide (BMI) resin doped with carbon nanotubes; a phenolic resin doped with carbon nanotubes; a cyanate ester resin doped with carbon nanotubes; an epoxy resin with chopped carbon fibers; a bismaleimide (BMI) resin with chopped carbon fibers; a phenolic resin with chopped carbon fibers; a cyanate ester resin with chopped carbon fibers; and a resin with poly(3,4-ethylenedioxythiophene) polystyrene sulfonate (PEDOT/PSS).

The step 156 (see FIG. 8) of injecting, under pressure, the conductive fluid 120 (see FIGS. 5A, 6, 7A), further comprises selecting the conductive fluid 120 (see FIGS. 5A, 6, 7A), so that a coefficient of thermal expansion (CTE) of the conductive fluid 120 (see FIGS. 5A, 6, 7A) substantially matches a coefficient of thermal expansion (CTE) of the composite structure 102 (see FIGS. 5A, 6, 7A) in contact with the conductive fluid 120 (see FIGS. 5A, 6, 7A). Further, in addition to similar CTEs and expansion characteristics, preferably, the resin material 121 (see FIG. 7A), or binding resin material or resin system, of the conductive fluid 120 (see FIGS. 5A, 6, 7A) has similar chemical properties and similar structural properties as the matrix material 104 (see FIGS. 5A, 6, 7A), such as the resin matrix 104a (see FIGS. 5A, 6, 7A) of the composite structure 102 (see FIGS. 5A, 6), such as the carbon fiber reinforced plastic (CFRP) structure 102a (see FIGS. 5A, 6).

In one embodiment, as shown in FIG. 5A, the step 152 (see FIG. 8) of installing the one or more fasteners 10 further comprises installing one or more fasteners 10 each with the plurality of flutes 80 terminating at a second location 86a (see FIG. 1A) proximal to the outer periphery 38 (see also FIG. 1A) of the head portion 22, and wherein the step 156 (see FIG. 8) of injecting, under pressure, the conductive fluid 120, further comprises injecting the conductive fluid 120 through the opening 40 of the fastener 10, having the plurality of flutes 80 terminating at the second location 86a (see FIG. 1A) proximal to the outer periphery 38 (see also FIG. 1A) of the head portion 22, and into the inner feed channel 70 (see FIG. 1B), such as in the form of inner central feed channel 70a (see FIG. 1B), of the fastener 10.

In another embodiment, as shown in FIG. 6, the step 152 (see FIG. 8) of installing the one or more fasteners 10 comprises installing one or more fasteners 10 each with the plurality of flutes 80 terminating at periphery openings 86b (see FIG. 3A) at the outer periphery 38 (see also FIG. 3A) of the head portion 22, i.e., radial feed channels 89 (see also FIG. 3A), and wherein the step 156 (see FIG. 8) of injecting, under pressure, the conductive fluid 120, further comprises injecting the conductive fluid 120 through each periphery openings 86b (see FIG. 3A) and along the plurality of flutes 80. Thus, in addition to transporting the conductive fluid 120 (see FIG. 6) through the opening 40 (see FIG. 6) of the fastener 10 (see FIG. 6) and into the inner feed channel 70 (see FIG. 6), such as in the form of inner central feed channel 70a (see FIG. 6), of the fastener 10 (see FIG. 6), this embodiment also transports the conductive fluid 120 (see FIG. 6) through the radial feed channel 89 (see FIGS. 3A, 6) formed by the periphery openings 86b (see FIGS. 3A) and the plurality of flutes 80 (see FIGS. 3A, 6).

As shown in FIG. 8, the method 150 further comprises step 158 of depositing or transporting the conductive fluid 120 (see FIG. 7A) to one or more areas 144 (see FIG. 7A) or gaps between an outer surface 64 (see FIG. 7A) of the fastener 10 (see FIG. 7A) and an inner surface 142 (see FIG. 7A) of the corresponding fastener hole 11 (see FIG. 7A) of the composite structure 102 (see FIG. 7A). When the conductive fluid 120 (see FIG. 7A) flows to and is deposited to and in the areas 144, the conductive fluid 120 (see FIG. 7A) conforms to the shape of the areas 144 and functions as a conforming conductive fluid 120a (see FIG. 7A), and the fastener 10 (see FIG. 7A) has a conformal clearance fit 146 (see FIG. 7A) within the composite structure 102 (see FIG. 7A).

As shown in FIG. 8, the method 150 further comprises step 160 of curing the composite structure 102 (see FIG. 7B) with the one or more fasteners 10 (see FIG. 7B) installed in the composite structure 102 (see FIG. 7B) to obtain a cured conforming conductive fluid 120b (see FIG. 7B). The curing step 160 (see FIG. 8) may be performed using a known curing process, such as an autoclave curing process, a vacuum bag curing process, a combination autoclave and vacuum bagging curing process, a compression mold curing process, a resin transfer molding process, a room temperature curing process, or another suitable curing process. As discussed above, the curing may take place at an elevated, effective temperature or effective heat and/or effective pressure for an effective period of time, as required per material specifications to effectively cure a chosen conductive fluid 120 (see FIGS. 5A, 6, 7A). The curing temperature or heat and/or pressure needed depends on the type of conductive fluid 120 (see FIG. 7A) chosen to be injected into the fastener 10 (see FIG. 7A), and may thus vary.

After injection and cure of the conductive fluid 120 (see FIG. 7B), the fastener 10 (see FIG. 7B) preferably has an effective interference fit 148 (see FIG. 7B) within the composite structure 102 (see FIG. 7B).

As shown in FIG. 8, the method 150 further comprises step 162 of providing electrical contact, and may provide improved or enhanced electrical contact, between carbon fibers 105a (see FIG. 7A) of the composite structure 102 (see FIG. 7A) and the fastener 10 (see FIG. 7A) installed in the corresponding fastener hole 11 (see FIG. 7A), to obtain electrical conductivity and dissipation of current energy 218 (see FIG. 9), resulting from lightning strikes 220 (see FIG. 9) to the aircraft 200a (see FIG. 9). Preferably, the one or more fasteners 10 (see FIGS. 1A, 2A, 3A) each comprise a conformal clearance fit fastener 12 (see FIGS. 1A, 2A, 3A) used with the conductive fluid 120 (see FIGS. 5A, 6, 7A), to obtain an effective interference fit 148 (see FIG. 7B) with an equal or greater electrical conductivity than a standard interference fit fastener.

Now referring to FIG. 9, FIG. 9 is an illustration of a perspective view of an air vehicle 200, such as an aircraft 200a, that may incorporate one or more composite structures 102, such as, for example, one or more aircraft composite structures 102b, having embodiments of the fasteners 10 (see FIGS. 1A, 2A, 3A) of the disclosure. Preferably, the composite structures 102 (see FIG. 9) comprise carbon fiber reinforced plastic (CFRP) structures 102a (see FIGS. 5A, 6, 7A). As shown in FIG. 9, the aircraft 200a comprises such components as a fuselage 202, a nose 204, a flight deck 206, wings 208, one or more propulsion units 210 or engines, and a tail 212 comprising a vertical stabilizer 214 and horizontal stabilizers 216.

Although the air vehicle 200, such as aircraft 200a, shown in FIG. 9 is generally representative of a commercial passenger aircraft having one or more composite structures 102, the teachings of the disclosed embodiments may be applied to other passenger aircraft. For example, the teachings of the disclosed embodiments may be applied to cargo aircraft, military aircraft, rotorcraft, and other types of aircraft or aerial vehicles, as well as aerospace vehicles, satellites, space launch vehicles, rockets, and other aerospace vehicles.

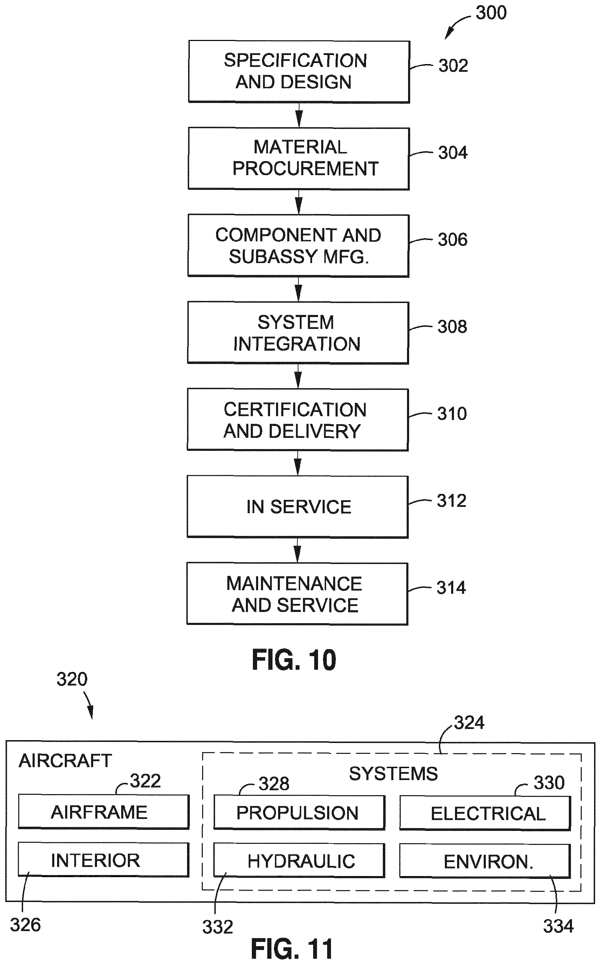

Now referring to FIGS. 10-11, FIG. 10 is a flow diagram of an aircraft manufacturing and service method 300. FIG. 11 is a block diagram of an aircraft 320. Referring to FIGS. 10-11, embodiments of the disclosure may be described in the context of the aircraft manufacturing and service method 300 as shown in FIG. 10, and the aircraft 320 as shown in FIG. 11.

As shown in FIG. 10, during pre-production, exemplary aircraft manufacturing and service method 300 may include specification and design 302 of the aircraft 320 (see FIG. 11) and material procurement 304. During manufacturing, component and subassembly manufacturing 306 (see FIG. 10) and system integration 308 (see FIG. 10) of the aircraft 320 (see FIG. 11) takes place. Thereafter, the aircraft 320 (see FIG. 11) may go through certification and delivery 310 (see FIG. 10) in order to be placed in service 312 (see FIG. 10). While in service 312 (see FIG. 10) by a customer, the aircraft 320 (see FIG. 11) may be scheduled for routine maintenance and service 314 (see FIG. 10) which may also include modification, reconfiguration, refurbishment, and other suitable services.

Each of the processes of the aircraft manufacturing and service method 300 (see FIG. 10) may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 11, the aircraft 320 produced by the exemplary aircraft manufacturing and service method 300 (see FIG. 10) may include an airframe 322 with a plurality of systems 324 and an interior 326. As further shown in FIG. 11, examples of the plurality of systems 324 may include one or more of a propulsion system 328, an electrical system 330, a hydraulic system 332, and an environmental system 334. Any number of other systems may be included. Although an aerospace example is shown, the principles of the disclosure may be applied to other industries, such as the automotive industry.

Methods and systems embodied herein may be employed during any one or more of the stages of the aircraft manufacturing and service method 300 (see FIG. 10). For example, components or subassemblies corresponding to component and subassembly manufacturing 306 (see FIG. 10) may be fabricated or manufactured in a manner similar to components or subassemblies produced while the aircraft 320 (see FIG. 11) is in service 312 (see FIG. 10). Also, one or more apparatus embodiments, method embodiments, or a combination thereof, may be utilized during component and subassembly manufacturing 306 (see FIG. 10) and system integration 308 (see FIG. 10), for example, by substantially expediting assembly of or reducing the cost of the aircraft 320 (see FIG. 11). Similarly, one or more of apparatus embodiments, method embodiments, or a combination thereof, may be utilized while the aircraft 320 (see FIG. 11) is in service 312 (see FIG. 10), for example and without limitation, to maintenance and service 314 (see FIG. 10).

Disclosed embodiments of the fastener 10 (see FIGS. 1A, 2A, 3A), the fastener system 100 (see FIGS. 5A, 6, 7A), and the method 150 (see FIG. 8) provide a conformal clearance fit fastener 12 (see FIGS. 1A, 2A, 3A) having an inner feed channel 70 (see FIGS. 1B, 2B, 3B), such as in the form of inner central feed channel 70a (see FIGS. 1B, 2B, 3B), one or more lateral feed channels 90 (see FIGS. 1B, 2B, 3B), and a plurality of flutes 80 (see FIGS. 1A, 2A, 3A), configured to deposit a conductive fluid 120 (see FIGS. 5A, 6, 7A) between the fastener 10 and the inner surface 142 (see FIG. 7A) of the corresponding fastener hole 11 (see FIG. 7A). The features of the inner feed channel 70 (see FIGS. 1B, 2B, 3B), such as in the form of inner central feed channel 70a (see FIGS. 1B, 2B, 3B), the one or more lateral feed channels 90 (see FIGS. 1B, 2B, 3B), and the plurality of flutes 80 (see FIGS. 1A, 2A, 3A) provide flow paths 140 (see FIG. 7B) for injecting and depositing the conductive fluid 120 (see FIGS. 5A, 6, 7A) in and to the one or more areas 144 (see FIG. 7A), or gaps, and surfaces surrounding the fastener 10 (see FIGS. 5A, 6, 7A), for the purpose of improving the current carrying capacity of the fastener 10 (see FIGS. 5A, 6, 7A), in lieu of sleeved interference fit fasteners and sleeves for interference fit fasteners. The structural characteristics of the novel and nonobvious fastener 10 (see FIGS. 1A, 2A, 3A) allow for the resin material 121 (see FIG. 7A) and conductive material 123 (see FIG. 7A) of the conductive fluid 120 (see FIGS. 5A, 6, 7A) to be inserted or injected within the fastener 10 (see FIGS. 1A, 2A, 3A), as well as the surrounding areas 144 (see FIG. 7A), or gaps, and surfaces around the fastener 10 (see FIG. 7A), to provide additional structural support, as well as conductivity, between the fastener (see FIG. 7A) and the composite structure 102 (see FIG. 7A). The plurality of flutes 80 (see FIGS. 1A, 2A, 3A) and the inner feed channel 70 (see FIGS. 1B, 2B, 3B), such as in the form of inner central feed channel 70a (see FIGS. 1B, 2B, 3B), allow the fastener 10 (see FIGS. 1A, 2A, 3A) to be easily inserted into a corresponding fastener hole 11 (see FIGS. 5A, 6, 7A), such as a clearance fit hole, in a composite structure 102 (see FIGS. 5A, 6, 7A), and subsequently filled with the conductive fluid 120 (see FIG. 7A) to achieve enhanced electrical conductivity in the areas 144 (see FIGS. 7A-7B) between the fastener 10 (see FIGS. 7A-7B) and the inner surface 142 (see FIGS. 7A-7B) of the corresponding fastener hole 11 (see FIGS. 7A-7B) of the composite structure 102 (see FIGS. 7A-7B), for example, a fastener-to-composite structure interface.

In addition, disclosed embodiments of the fastener 10 (see FIGS. 1A, 2A, 3A), the fastener system 100 (see FIGS. 5A, 6, 7A), and the method 150 (see FIG. 8) provide for an inexpensive, fluted, sleeveless, conformal clearance fit fastener 12 (see FIGS. 1A, 2A, 3A) that is used in conjunction with the conductive fluid 120 (see FIGS. 5A, 6, 7A) to yield the equivalent, or better, electrical conductivity than that of known interference fit fasteners. The easy to install fasteners 10 (see FIGS. 1A, 2A, 3A) provide good electrical contact and good electrical conductivity with the composite structures 102 (see FIGS. 5A, 6, 7A) the fasteners 10 (see FIGS. 1A, 2A, 3A) are inserted within, for example, aircraft composite wing skins. This, in turn, may reduce substructure current, may reduce the possibility of discharge or sparking in aircraft fuel tanks, and may reduce the time, labor, and expense to apply electrically insulating sealants and to install fastener cap seals currently employed to ameliorate these unwanted effects.

Moreover, the fastener 10 (see FIGS. 1A, 2A, 3A), the fastener system 100 (see FIGS. 5A, 6, 7A), and the method 150 (see FIG. 8) may provide for a reduced overall weight of an air vehicle 200 (see FIG. 9), such as an aircraft 200a (see FIG. 9), by eliminating or minimizing the use of heavy electrically insulating sealants on the fasteners, for example, as used in aircraft fuel tanks, for protection against lightning strikes 220 (see FIG. 9), by eliminating or minimizing the use of sleeved fasteners, such as interference fit fasteners with sleeves that may add weight, and by eliminating or minimizing the use of numerous fastener cap seals on fasteners that may add weight. Further, the fastener 10 (see FIGS. 1A, 2A, 3A), the fastener system 100 (see FIGS. 5A, 6, 7A), and the method 150 (see FIG. 8), may reduce the cost of lightning mitigation on composite structures 102 (see FIG. 9) of aircraft 200a (see FIG. 9) by employing the less expensive fasteners 10 (see FIGS. 1A, 2A, 3A) disclosed herein that provide equivalent or better electrical connection to composite structures 102 (see FIGS. 5A, 6, 7A), such as aircraft composite wing skins. The cost of secondary sealants and fastener cap seals may also be reduced with the disclosed fasteners 10 (see FIGS. 1A, 2A, 3A) and fastener system 100 (see FIGS. 5A, 6, 7A).

Further, disclosed embodiments of the fastener 10 (see FIGS. 1A, 2A, 3A), the fastener system 100 (see FIGS. 5A, 6, 7A), and the method 150 (see FIG. 8), may also facilitate and enhance the reliability of reworked joints 107 (see FIGS. 5A, 6), since any damaged fasteners may be removed and replaced with new fasteners 10 (see FIGS. 1A, 2A, 3A) of the same size and configuration, without the need for re-drilling oversized fastener holes to accommodate interference fit installation of larger diameter fasteners.

Many modifications and other embodiments of the disclosure will come to mind to one skilled in the art to which this disclosure pertains having the benefit of the teachings presented in the foregoing descriptions and the associated drawings. The embodiments described herein are meant to be illustrative and are not intended to be limiting or exhaustive.

## Claims

1. A fastener (10) comprising:
an elongated shaft (14) having a first end (16), a second end (18), and a shaft body (20) disposed between the first end and the second end;
a head portion (22) disposed at the first end;
a threaded portion (42) disposed at the second end;
at least one inner feed channel (70) extending from an opening (40) in the head portion, through the head portion and the shaft body, along a longitudinal central axis (78) of the elongated shaft, and terminating proximal to the threaded portion;
a plurality of flutes (80) formed along and circumferentially spaced around an outer surface (64) of the shaft body and an outer surface (32) of the head portion, each flute having a first end (82) extending from a first location (84) proximal to the threaded portion, along the outer surface of the shaft body, and radially outward along the outer surface of the head portion; and
one or more lateral feed channels (90) formed laterally through the shaft body, each lateral feed channel connecting the inner feed channel to at least two opposing flutes on the outer surface of the shaft body.

2. The fastener (10) of claim 1 wherein the shaft body (20) has a straight or substantially straight outer profile (66a).

3. The fastener (10) of claim 1 wherein the shaft body (20) has a tapered outer profile (66b).

4. The fastener (10) of any preceding claim wherein when the fastener is installed into a corresponding fastener hole (11), the at least one inner feed channel (70), the one or more lateral feed channels (90), and the plurality of flutes (80) are configured to transport and deposit a conductive fluid (120) injected into the fastener to one or more areas (144) between an outer surface (64) of the fastener and an inner surface (142) of the corresponding fastener hole.

5. The fastener (10) of any preceding claim wherein the elongated shaft (14) has at least two sets (90a, 90b) of the one or more lateral feed channels (90) formed laterally through the shaft body (20), the at least two sets being spaced apart from each other.

6. The fastener (10) of any preceding claim wherein each flute (80) extends radially outward along the outer surface (32) of the head portion (22) and terminates at a second end (86), the second end comprising one of a second location (86a) proximal to an outer periphery (38) of the head portion, and a periphery opening (86b) at the outer periphery of the head portion.

7. A composite structure, such as a carbon fiber reinforced plastic structure, comprising a fastener according to any of claims 1-6.

8. An air vehicle, such as an aircraft, comprising a composite structure according to claim 7.

9. A method for providing to a composite structure (102) of an aircraft (200a) improved electrical conductivity and dissipation of current energy (218) resulting from lightning strikes (220) to the aircraft, the method comprising the steps of:
installing one or more fasteners (10) as claimed in claim 1 into one or more corresponding fastener holes (11) formed in the composite structure;
torquing the one or more fasteners in place in the one or more corresponding fastener holes;
injecting, under pressure, a conductive fluid (120) into the opening in the head portion of each fastener, and through the at least one inner feed channel and through at least one of the one or more lateral feed channels;
depositing the conductive fluid to one or more areas (144) between an outer surface (64) of each fastener and an inner surface (142) of each corresponding fastener hole of the composite structure;
curing the composite structure with the one or more fasteners installed in the composite structure; and
providing electrical contact between carbon fibers (105a) of the composite structure and each fastener installed in each corresponding fastener hole, to obtain electrical conductivity and dissipation of current energy, resulting from lightning strikes to the aircraft.

10. The method of claim 9 wherein the installing the one or more fasteners (10) comprises installing the one or more fasteners, each with the shaft body (20) having a straight or substantially straight outer profile (66a).

11. The method of claim 9 wherein the installing the one or more fasteners (10) comprises installing the one or more fasteners, each with the shaft body (20) having a tapered outer profile (66b).

12. The method of any of claims 9 to 11 wherein the installing the one or more fasteners (10) comprises installing one or more fasteners, each with the plurality of flutes (80) each terminating at a periphery opening (86b) at an outer periphery (38) of the head portion, and wherein the injecting, under pressure, the conductive fluid further comprises injecting the conductive fluid through each periphery opening and along the plurality of flutes.

13. The method of any of claims 9 to 12 wherein the step of injecting, under pressure, the conductive fluid (120) comprises using an injection tool assembly (110) to inject the conductive fluid into the fastener (10), the injection tool assembly comprising a vessel (122) containing the conductive fluid, the vessel configured for coupling to the fastener, and wherein the injection tool assembly further comprises a pressure injector (126) coupled to the vessel and configured to couple to the opening in the head portion of the fastener, the pressure injector configured to inject the conductive fluid, under pressure, into the fastener.

14. The method of any of claims 9 to 13 wherein the step of injecting, under pressure, the conductive fluid (120) comprises injecting the conductive fluid comprising a resin material (121) mixed with a conductive material (123) that is electrically conductive.

15. The method of any of claims 9 to 14 wherein the step of injecting, under pressure, the conductive fluid (120) comprises selecting the conductive fluid so that a coefficient of thermal expansion of the conductive fluid substantially matches a coefficient of thermal expansion of the composite structure (102) in contact with the conductive fluid.

## Patentansprüche

1. Befestigungselement (10), umfassend:
einen langgestreckten Schaft (14) mit einem ersten Ende (16), einem zweiten Ende (18) und einem zwischen dem ersten Ende und dem zweiten Ende angeordneten Schaftkörper (20);
einen Kopfabschnitt (22), der an dem ersten Ende angeordnet ist;
einen Gewindeabschnitt (42), der an dem zweiten Ende angeordnet ist;
mindestens einen inneren Zuführungskanal (70), der sich von einer Öffnung (40) in dem Kopfabschnitt durch den Kopfabschnitt und den Schaftkörper entlang einer Längsmittelachse (78) des langgestreckten Schafts erstreckt und proximal zu dem Gewindeabschnitt endet;
eine Mehrzahl von Rillen (80), die entlang einer Außenfläche (64) des Schaftkörpers und einer Außenfläche (32) des Kopfabschnitts und in deren Umfangsrichtung beabstandet ausgebildet sind, wobei jede Rille ein erstes Ende (82) aufweist, das sich von einer zum Gewindeabschnitt proximalen ersten Stelle (84) entlang der Außenfläche des Schaftkörpers und radial nach außen entlang der Außenfläche des Kopfabschnitts erstreckt; und
einen oder mehrere seitliche Zuführungskanäle (90), die seitlich durch den Schaftkörper ausgebildet sind, wobei jeder seitliche Zuführungskanal den inneren Zuführungskanal mit mindestens zwei gegenüberliegenden Rillen an der Außenfläche des Schaftkörpers verbindet.

2. Befestigungselement (10) nach Anspruch 1, bei dem der Schaftkörper (20) ein gerades oder im wesentlichen gerades Außenprofil (66a) aufweist.

3. Befestigungselement (10) nach Anspruch 1, bei dem der Schaftkörper (20) ein konisch zulaufendes Außenprofil (66b) aufweist.

4. Befestigungselement (10) nach einem der vorhergehenden Ansprüche, bei dem, wenn das Befestigungselement in einem entsprechenden Befestigungselementloch (11) installiert wird, der mindestens eine innere Zuführungskanal (70), der eine oder die mehreren seitlichen Zuführungskanäle (90) und die Mehrzahl von Rillen (80) so konfiguriert sind, dass sie ein leitfähiges Fluid (120), das in das Befestigungselement eingespritzt wird, transportieren und in einem oder mehreren Bereichen (144) zwischen einer Außenfläche (64) des Befestigungselements und einer Innenfläche (142) des entsprechenden Befestigungselementlochs ablagern.

5. Befestigungselement (10) nach einem der vorhergehenden Ansprüche, bei dem der langgestreckte Schaft (14) mindestens zwei Sätze (90a, 90b) der ein oder mehreren seitwärts durch den Schaftkörper (20) ausgebildeten seitlichen Zuführungskanäle (90) aufweist, wobei die mindestens zwei Sätze voneinander beabstandet sind.

6. Befestigungselement (10) nach einem der vorhergehenden Ansprüche, bei dem sich jede Rille (80) radial nach außen entlang der Außenfläche (32) des Kopfabschnitts (22) erstreckt und an einem zweiten Ende (86) endet, wobei das zweite Ende entweder eine zweite Stelle (86a) proximal zu einem Außenumfang (38) des Kopfabschnitts oder eine Umfangsöffnung (86b) am Außenumfang des Kopfabschnitts umfasst.

7. Verbundstruktur, z.B. kohlefaserverstärkte Kunststoffstruktur, mit einem Befestigungselement nach einem der Ansprüche 1-6.

8. Luftfahrzeug, z.B. Flugzeug, mit einer Verbundstruktur nach Anspruch 7.

9. Verfahren zum Versehen einer Verbundstruktur (102) eines Flugzeugs (200a) mit verbesserter elektrischer Leitfähigkeit und Dissipation von aus Blitzeinschlägen (220) in das Flugzeug resultierender elektrischer Energie (218), wobei das Verfahren die folgenden Schritte umfasst:
Installieren eines oder mehrerer Befestigungselemente (10) nach Anspruch 1 in einem oder mehreren entsprechenden in der Verbundstruktur ausgebildeten Befestigungslöchern (11);
Festziehen der ein oder mehreren Befestigungselemente in den ein oder mehreren entsprechenden Befestigungslöchern;
Einspritzen eines leitfähigen Fluids (120) unter Druck in die Öffnung im Kopfteil jedes Befestigungselements und durch den mindestens einen inneren Zuführungskanal und durch mindestens einen der ein oder mehreren seitlichen Zuführungskanäle;
Ablagern des leitfähigen Fluids in einem oder mehreren Bereichen (144) zwischen einer Außenfläche (64) jedes Befestigungselements und einer Innenfläche (142) jedes entsprechenden Befestigungselementlochs der Verbundstruktur;
Aushärten der Verbundstruktur mit den ein oder mehreren in der Verbundstruktur installierten Befestigungselementen; und
Bereitstellen von elektrischem Kontakt zwischen den Kohlefasern (105a) der Verbundstruktur und jedem in jedem entsprechenden Befestigungsloch installierten Befestigungselement, um elektrische Leitfähigkeit und die Ableitung von aus Blitzeinschlägen in das Flugzeug resultierender elektrischer Energie zu erreichen.

10. Verfahren nach Anspruch 9, bei dem das Installieren der ein oder mehreren Befestigungselemente (10) das Installieren der ein oder mehreren Befestigungselemente mit geradem oder im Wesentlichen geradem Außenprofil (66a) des Schaftkörpers (20) umfasst.

11. Verfahren nach Anspruch 9, bei dem das Installieren der ein oder mehreren Befestigungselemente (10) das Installieren der ein oder mehreren Befestigungselemente mit konischem Außenprofil (66b) des Schaftkörpers (20) umfasst.

12. Verfahren nach einem der Ansprüche 9 bis 11, bei dem das Installieren der ein oder mehreren Befestigungselemente (10) das Installieren der ein oder mehreren Befestigungselemente mit jeweils an einer Umfangsöffnung (86b) an einem äußeren Umfang (38) des Kopfabschnitts endenden mehreren Rillen (80) umfasst, und bei dem das Einspritzen des leitfähigen Fluids unter Druck weiterhin das Einspritzen des leitfähigen Fluids durch jede Umfangsöffnung und entlang der Mehrzahl von Rillen umfasst.

13. Verfahren nach einem der Ansprüche 9 bis 12, bei dem der Schritt des Einspritzens des leitfähigen Fluids (120) unter Druck die Verwendung einer Einspritzwerkzeuganordnung (110) zum Einspritzen des leitfähigen Fluids in das Befestigungselement (10) umfasst, wobei die Einspritzwerkzeuganordnung einen Behälter (122) umfasst, der das leitfähige Fluid enthält, wobei der Behälter zum Koppeln mit dem Befestigungselement konfiguriert ist, und wobei die Einspritzwerkzeuganordnung ferner einen Druckeinspritzer (126) umfasst, der mit dem Behälter gekoppelt und zum Koppeln mit der Öffnung im Kopfabschnitt des Befestigungselements konfiguriert ist, wobei der Druckeinspritzer zum Einspritzen des leitfähigen Fluids unter Druck in das Befestigungselement konfiguriert ist.

14. Verfahren nach einem der Ansprüche 9 bis 13, bei dem der Schritt des Einspritzens des leitfähigen Fluids (120) unter Druck das Einspritzen des leitfähigen Fluids umfasst, das ein Harzmaterial (121) umfasst, das mit einem leitfähigen Material (123) vermischt ist, das elektrisch leitfähig ist.

15. Verfahren nach einem der Ansprüche 9 bis 14, bei dem der Schritt des Einspritzens des leitfähigen Fluids (120) unter Druck das Auswählen des leitfähigen Fluids derart umfasst, dass ein Wärmeausdehnungskoeffizient des leitfähigen Fluids im Wesentlichen mit einem Wärmeausdehnungskoeffizienten der mit dem leitfähigen Fluid in Kontakt stehenden Verbundstruktur (102) übereinstimmt.

## Revendications

1. Fixation (10) comprenant :
un arbre allongé (14) ayant une première extrémité (16), une seconde extrémité (18), et un corps d'arbre (20) disposé entre la première extrémité et la seconde extrémité ;
une partie de tête (22) disposée au niveau de la première extrémité ;
une partie filetée (42) disposée au niveau de la seconde extrémité ;
au moins un canal d'alimentation intérieur (70) s'étendant depuis une ouverture (40) dans la partie de tête, à travers la partie de tête et le corps d'arbre, le long d'un axe central longitudinal (78) de l'arbre allongé, et se terminant de manière proximale à la partie filetée ;
une pluralité de cannelures (80) formées le long, et circonférentiellement espacées autour, d'une surface extérieure (64) du corps d'arbre et d'une surface extérieure (32) de la partie de tête, chaque cannelure ayant une première extrémité (82) s'étendant à partir d'un premier emplacement (84) proximal à la partie filetée, le long de la surface extérieure du corps d'arbre, et radialement vers l'extérieur le long de la surface extérieure de la partie de tête ; et
un ou plusieurs canaux d'alimentation latéraux (90) formés latéralement à travers le corps d'arbre, chaque canal d'alimentation latéral reliant le canal d'alimentation intérieur à au moins deux cannelures opposées sur la surface extérieure du corps d'arbre.

2. Fixation (10) selon la revendication 1, dans laquelle le corps d'arbre (20) a un profil extérieur rectiligne ou sensiblement rectiligne (66a).

3. Fixation (10) selon la revendication 1, dans laquelle le corps d'arbre (20) a un profil extérieur effilé (66b) .

4. Fixation (10) selon l'une quelconque des revendications précédentes, dans laquelle, lorsque la fixation est installée dans un trou de fixation correspondant (11), le au moins un canal d'alimentation intérieur (70), les un ou plusieurs canaux d'alimentation latéraux (90), et la pluralité de cannelures (80) sont configurés pour transporter et déposer un fluide conducteur (120) injecté dans la fixation dans une ou plusieurs zones (144) situées entre une surface extérieure (64) de la fixation et une surface intérieure (142) du trou de fixation correspondant.

5. Fixation (10) selon l'une quelconque des revendications précédentes, dans laquelle l'arbre allongé (14) a au moins deux ensembles (90a, 90b) constitués des un ou plusieurs canaux d'alimentation latéraux (90) formés latéralement à travers le corps d'arbre (20), les au moins deux ensembles étant espacés l'un de l'autre.

6. Fixation (10) selon l'une quelconque des revendications précédentes, dans laquelle chaque cannelure (80) s'étend radialement vers l'extérieur le long de la surface extérieure (32) de la partie de tête (22) et se termine au niveau d'une seconde extrémité (86), la seconde extrémité comprenant l'un parmi un second emplacement (86a) proximal à une périphérie extérieure (38) de la partie de tête, et une ouverture périphérique (86b) au niveau de la périphérie extérieure de la partie de tête.

7. Structure composite, telle qu'une structure en matière plastique renforcée de fibres de carbone, comprenant une fixation selon l'une quelconque des revendications 1 à 6.

8. Véhicule aérien, tel qu'un aéronef, comprenant une structure composite selon la revendication 7.

9. Procédé pour fournir à une structure composite (102) d'un aéronef (200a) une conductivité électrique et une dissipation améliorées d'énergie de courant (218) résultant d'éclairs (220) sur l'aéronef, le procédé comprenant les étapes consistant à :
installer une ou plusieurs fixations (10) selon la revendication 1 dans un ou plusieurs trous de fixation correspondants (11) formés dans la structure composite ;
serrer les une ou plusieurs fixations en place dans les un ou plusieurs trous de fixation correspondants ;
injecter, sous pression, un fluide conducteur (120) dans l'ouverture de la partie de tête de chaque fixation, et à travers le au moins un canal d'alimentation intérieur et à travers au moins l'un des un ou plusieurs canaux d'alimentation latéraux ;
déposer le fluide conducteur dans une ou plusieurs zones (144) situées entre une surface extérieure (64) de chaque fixation et une surface intérieure (142) de chaque trou de fixation correspondant de la structure composite ;
durcir la structure composite avec les une ou plusieurs fixations installées dans la structure composite ; et
établir un contact électrique entre des fibres de carbone (105a) de la structure composite et chaque fixation installée dans chaque trou de fixation correspondant, pour obtenir une conductivité électrique et une dissipation d'énergie de courant, résultant d'éclairs sur l'aéronef.

10. Procédé selon la revendication 9, dans lequel l'installation des une ou plusieurs fixations (10) comprend l'installation des une ou plusieurs fixations, chacune avec le corps d'arbre (20) ayant un profil extérieur rectiligne ou sensiblement rectiligne (66a).

11. Procédé selon la revendication 9, dans lequel l'installation des une ou plusieurs fixations (10) comprend l'installation des une ou plusieurs fixations, chacune avec le corps d'arbre (20) ayant un profil extérieur effilé (66b).

12. Procédé selon l'une quelconque des revendications 9 à 11, dans lequel l'installation des une ou plusieurs fixations (10) comprend l'installation d'une ou plusieurs fixations, chacune avec la pluralité de cannelures (80) se terminant chacune au niveau d'une ouverture périphérique (86b) à une périphérie extérieure (38) de la partie de tête, et dans lequel l'injection, sous pression, du fluide conducteur comprend en outre l'injection du fluide conducteur à travers chaque ouverture périphérique et le long de la pluralité de cannelures.

13. Procédé selon l'une quelconque des revendications 9 à 12 dans lequel l'étape d'injection, sous pression, du fluide conducteur (120) comprend l'utilisation d'un ensemble d'outil d'injection (110) pour injecter le fluide conducteur dans la fixation (10), l'ensemble d'outil d'injection comprenant un récipient (122) contenant le fluide conducteur, le récipient étant configuré pour se coupler à la fixation, et dans lequel l'ensemble d'outil d'injection comprend en outre un injecteur à pression (126) couplé au récipient et configuré pour se coupler à l'ouverture dans la partie de tête de la fixation, l'injecteur à pression étant configuré pour injecter le fluide conducteur, sous pression, dans la fixation.

14. Procédé selon l'une quelconque des revendications 9 à 13 dans lequel l'étape d'injection, sous pression, du fluide conducteur (120) comprend l'injection du fluide conducteur comprenant un matériau de résine (121) mélangé à un matériau conducteur (123) qui est électriquement conducteur.

15. Procédé selon l'une quelconque des revendications 9 à 14, dans lequel l'étape d'injection, sous pression, du fluide conducteur (120) comprend la sélection du fluide conducteur de sorte qu'un coefficient de dilatation thermique du fluide conducteur correspond sensiblement à un coefficient de dilatation thermique de la structure composite (102) en contact avec le fluide conducteur.
